(19) Europäisches Patentamt

European Patent Office

Office européen des brevets

(11) EP 2 270 713 A2

(12) EUROPEAN PATENT APPLICATION

(43) Date of publication:
05.01.2011 Bulletin 2011/01

(51) Int Cl.:
$G06K\ 9/00$ (2006.01)  $G07C\ 9/00$ (2006.01)

(21) Application number: 10167972.8

(22) Date of filing: 30.06.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 01.07.2009 JP 2009157193

(71) Applicant: Fujitsu Limited
Kawasaki-shi, Kanagawa 211-8588 (JP)

(72) Inventor: Kamakura, Ken
Kawasaki-shi Kanagawa 211-8588 (JP)

(74) Representative: Fenlon, Christine Lesley
Haseltine Lake LLP
Lincoln House, 5th Floor
300 High Holborn
London WC1V 7JH (GB)

(54) Biometric authentication system, biometric authentication method, biometric authentication apparatus, biometric information processing apparatus

(57) A biometric authentication method includes an enrollment step of generating enrollment-purpose mixed feature point information by extracting enrollment-purpose true feature point information from input enrollment-purpose biometric information, and by combining part of the enrollment-purpose true feature point information, which is selected based on dummy data generated at random, and false feature point information generated based on the dummy data, and an authentication step of executing authentication by extracting authentication-purpose feature point information from input authentication-purpose biometric information, generating authentication-purpose mixed feature point information that includes part of the authentication-purpose feature point information, which is selected based on the false feature point information, and the false feature point information, and by matching the authentication-purpose mixed feature point information with the enrollment-purpose mixed feature point information.

FIG. 1

**Description**

CROSS-REFERENCE TO RELATED APPLICATIONS

This application is based upon and claims the benefit of priority of the prior Japanese Patent Application No. 2009-157193, filed on July 1, 2009, the entire contents of which are incorporated herein by reference.

FIELD

This application relates to an authentication technique using biometric information.

BACKGROUND

Authentication systems using biometric information are known which enroll, as the biometric information, a fingerprint, an iris, a vein pattern, a retina, a face, a voiceprint, a signature, etc. In the following description, the enrolled biometric information is also referred to as an "enrolled template".
Even when the enrolled template is encrypted, there is no assurance that it will not be decrypted sometime later, once the enrolled template is leaked. Also, the biometric information cannot be intentionally changed by a enrolled user unlike a password that can be set any number of times as required. Accordingly, when standardization of the biometric exchange format is completed, it is difficult to prevent spoofing of the enrolled template.
Further, studies so far reported indicate that sample biometric data (hereinafter also referred to as "temporary biometric data"), which is spoofing, can be generated (produced) if the enrolled template having been leaked and sufficient sample data are present at hand.
To avoid such a possibility, the following document proposes a method for protecting the enrolled template, for example, by replacing an original image, from which the enrolled template has been generated, in units of block, or by transforming the image through morphing.
"N. K. Ratha, et al., "Enhancing security and privacy in biometrics-based authentication systems", IBM SYSTEMS JOURNAL, VOL.40, NO.3, 2001"
Further, the following related-art documents propose authentication systems for preventing a leak of biometric information by storing transform parameters for biometric information, sampled from a living body, in a portable recording medium or an IC card, and storing the transformed biometric information in a server.

"Japanese Laid-open Patent Publication No. 2006-158851"

"Japanese Laid-open Patent Publication No. 2007-328502"

SUMMARY

A biometric authentication method includes an enrollment step of generating enrollment-purpose mixed feature point information by extracting enrollment-purpose true feature point information from input enrollment-purpose biometric information, and by combining part of the enrollment-purpose true feature point information, which is selected based on dummy data generated at random, and false feature point information generated based on the dummy data, and an authentication step of executing authentication by extracting authentication-purpose feature point information from input authentication-purpose biometric information, generating authentication-purpose mixed feature point information that includes part of the authentication-purpose feature point information, which is selected based on the false feature point information, and the false feature point information, and by matching the authentication-purpose mixed feature point information with the enrollment-purpose mixed feature point information.

BRIEF DESCRIPTION OF DRAWINGS

Fig. 1 is a block diagram illustrating the functional configuration of a biometric authentication system as one example of a first embodiment;

Fig. 2 is a block diagram illustrating the hardware configuration of the biometric authentication system as one example of the first embodiment;

Fig. 3 is an illustration to explain a true feature point;

Fig. 4 is an illustration to explain an allowable range set for the feature point in the biometric authentication system as one example of the first embodiment;

Fig. 5 is an illustration to explain a method of setting a sector-shaped allowable range in the biometric authentication system as one example of the first embodiment;

Fig. 6 is a table to explain the method of setting the sector-shaped allowable range in the biometric authentication system as one example of a first embodiment;

Fig. 7 is a graph to explain the method of setting the sector-shaped allowable range in the biometric authentication system as one example of the first embodiment;

Fig. 8 is an illustration to explain the method of setting the sector-shaped allowable range in the biometric authentication system as one example of the first embodiment;

Fig. 9 is an illustration to explain a first selection step in the biometric authentication system as one example of the first embodiment;

Fig. 10 is an illustration to explain the first selection step in the biometric authentication system as one example of the first embodiment;

Fig. 11 is an illustration to explain the first selection step in the biometric authentication system as one example of the first embodiment;

Fig. 12 is an illustration to explain a second selection step in the biometric authentication system as one example of the first embodiment;

Fig. 13 is an illustration to explain the second selection step in the biometric authentication system as one example of the first embodiment;

Fig. 14 is an illustration to explain a method of deleting a selected false feature point in the biometric authentication system as one example of the first embodiment;

Fig. 15 is an illustration to explain a set of false feature points and range information, which are generated in the biometric authentication system as one example of the first embodiment;

Fig. 16 is a table illustrating an example of false feature point information that is stored in a dummy data storage in the biometric authentication system as one example of the first embodiment;

Fig. 17 is a table illustrating an example of the range information that is stored in the dummy data storage in the biometric authentication system as one example of the first embodiment;

Fig. 18 is an illustration to explain an enrolled template in the biometric authentication system as one example of the first embodiment;

Fig. 19 is a block diagram illustrating processing procedures when an enrollment process is executed in the biometric authentication system as one example of the first embodiment;

Fig. 20 is a flowchart to explain an enrollment process of fingerprint information in the biometric authentication system as one example of the first embodiment;

Fig. 21 is a block diagram illustrating processing procedures when an authentication process is executed in the biometric authentication system as one example of the first embodiment;

Fig. 22 is a flowchart to explain an authentication process using fingerprint information of a person to be identified by authentication, which is executed in the biometric authentication system as one example of the first embodiment;

Fig. 23 is a block diagram illustrating processing procedures in a client terminal and a biometric authentication server when biometric information is re-enrolled in the biometric authentication system as one example of the first embodiment;

Fig. 24 is a block diagram illustrating processing procedures in the client terminal and the biometric authentication server when an authentication process is executed in a biometric authentication system as one example of a second embodiment;

Fig. 25 illustrates a state where extra false feature points are combined with a set of selected false feature points in the biometric authentication system as one example of the second embodiment;

Fig. 26 is an illustration to explain an allowance for change of a false feature point in the biometric authentication system as one example of the second embodiment;

Fig. 27 is a table illustrating examples of the allowance for change in the biometric authentication system as one example of the second embodiment;

Fig. 28 is a table to explain states before and after the false feature point is changed in the biometric authentication system as one example of the second embodiment;

Fig. 29 is a block diagram illustrating processing procedures in the client terminal and the biometric authentication server when biometric information is re-enrolled in the biometric authentication system as one example of the second embodiment;

Fig. 30 is an illustration to explain false feature points which are generated to make the same true feature points remained in the biometric authentication system as one example of the second embodiment;

Fig. 31 is a block diagram illustrating the functional configuration of a biometric authentication system as one example of modifications;

Fig. 32 is a block diagram illustrating the functional configuration of a biometric authentication system as the other example of modifications;

Fig. 33 is a block diagram illustrating the functional configuration of a biometric authentication system as still the other example of modifications; and

Fig. 34 is a block diagram illustrating the functional configuration of a biometric authentication system as still the other example of modifications.

DESCRIPTION OF EMBODIMENTS

An authentication system disclosed in this application will be described below with reference to the accompanying drawings.
First, problems with the above-mentioned background art are described.
The above-described known method of, for example, transforming the original image from which the enrolled template has been generated has a problem that the original image can be inferred from the transformed image based on a visual match or mismatch. Another problem is that the transform of the image changes the distance between feature points and hence increase error rates in authentication.
Further, if the transform parameters and the biometric information after the transform are leaked, there is a risk that the original biometric information is found out (leaked) through inverse transform of the leaked biometric information.
In other words, the known authentication system is premised on that the parameters for changing the enrolled template are safely kept as secret information. Thus, the known authentication system is essentially designed just to keep secret not only an encryption key, but also an algorithm.
Accordingly, if the enrolled template held on a server and the secret information held in a portable recording medium or an IC card by a user are both leaked, there is a risk that feature point information is deciphered. Such a risk is equivalent to a leak in the related art that, when the biometric information is encrypted and held as the enrolled template, the enrolled template on the server and a key for decryption are both leaked.
Further, a method of eliminating the necessity of keeping the transform parameters is known in which the transform parameters are generated each time by using a passphrase, for example. However, such a method has a problem that it becomes possible to fraudulently generate the transform parameters if the passphrase is leaked.

A biometric authentication system, a biometric authentication method, a biometric authentication apparatus, a biometric information processing apparatus, a biometric authentication program, and a biometric information processing program, which can solve the above-mentioned problems, will be described below with reference to the drawings.

(A) First Embodiment

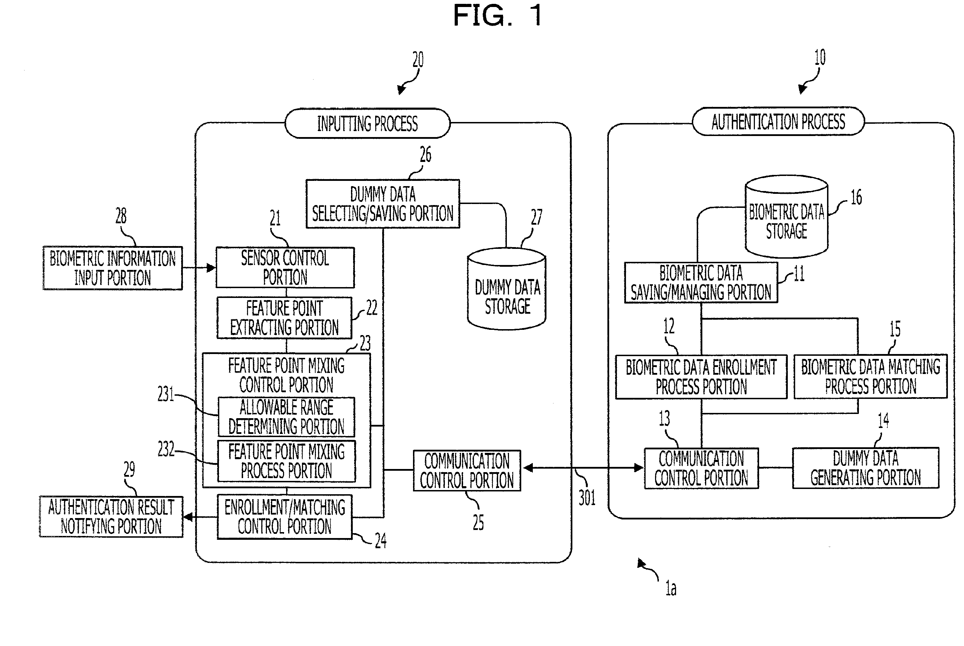

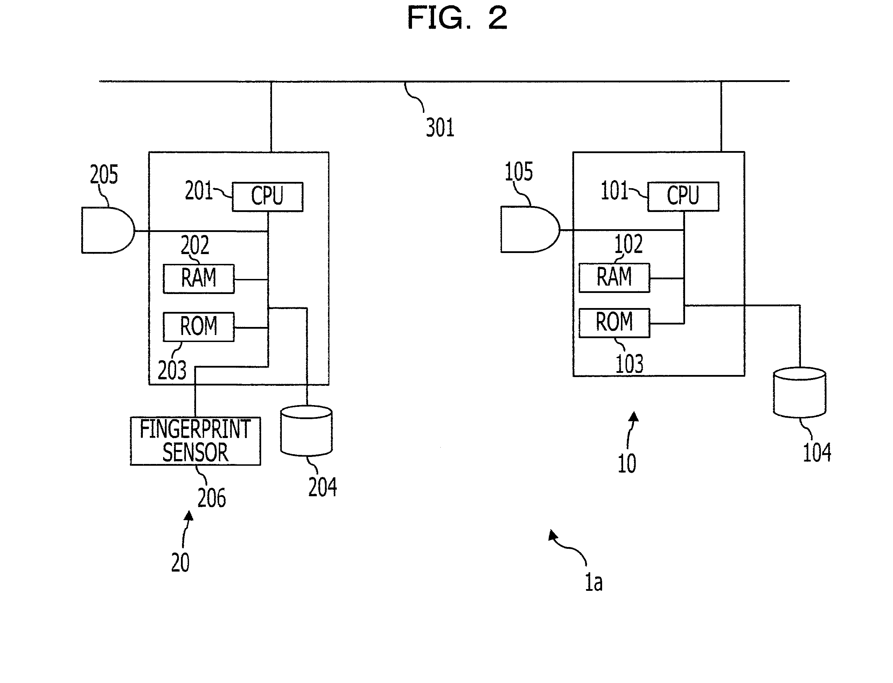

Fig. 1 is a block diagram illustrating the functional configuration of a biometric authentication system as one example of a first embodiment. Fig. 2 is a block diagram illustrating the hardware configuration of the biometric authentication system in Fig. 1.

A biometric authentication system 1 a according to the first embodiment is a system for executing authentication using biometric information. As illustrated in Figs. 1 and 2, the biometric authentication system 1a includes a biometric authentication server 10 and a client terminal 20.

The biometric authentication system 1 a is constituted as a client/server-type biometric authentication system in which the client terminal 20 executes extraction of feature point information and the biometric authentication server 10 executes enrollment and matching of biometric information.

For example, a fingerprint, a palm print, finger veins, palm veins, etc. can be used as the biometric information. The following description is made in connection with the case where a fingerprint is used as the biometric information.

The client terminal 20 is an information processing apparatus that primarily executes an inputting process for the biometric information. As illustrated in Fig. 1, the client terminal 20 executes the inputting process with cooperation of a sensor control portion 21, a feature point extracting portion 22, feature point mixing control portion 23, an enrollment/ matching control portion 24, a communication control portion 25, a dummy data selecting/saving portion 26, and a dummy data storage 27. In addition, the client terminal 20 has a biometric information input portion 28 and an authentication result notifying portion 29.

As illustrated in Fig. 2, the client terminal 20 includes a CPU (Central Processing Unit) 201, a RAM (Random Access Memory) 202, a ROM (Read Only Memory) 203, a storage device 204, a display device 205, and a fingerprint sensor 206. The client terminal 20 is connected to the biometric authentication server 10 (described later) in a manner permitting communication therebetween via a communication line 301.

The CPU 201 executes an OS (Operating System) and other various programs, which are stored in the ROM 203 and the storage device 204, thereby performing various kinds of processing operations and control. In the biometric authentication system 1 a according to the first embodiment, the CPU 201 implements the inputting process, illustrated in Fig. 1, by executing the biometric authentication program and the biometric information processing program, which are stored in the storage device 204, etc.

The ROM 203 stores various kinds of data and programs. The RAM 202 temporarily stores data, programs, etc. when the CPU 201 executes the processing operations, etc.

The storage device 204 stores various kinds of data and programs, and it is constituted by, e.g., a HDD (Hard Disk Drive). The display device 205 displays the results of the processing operations executed by the CPU 201 and the information to be presented to an operator.

The fingerprint sensor 206 senses the fingerprint of a person to be identified by authentication for visualization through imaging (i.e., conversion into an image). One of various fingerprint sensors of, e.g., the electrostatic capacitive type, the electric field detection type, the pressure sensitive type, or the optical type can be optionally used as the fingerprint sensor 206.

The biometric authentication server 10 is an information processing apparatus that primarily executes an authentication process. As illustrated in Fig. 1, the biometric authentication server 10 executes the authentication process with cooperation of a biometric data saving/managing portion 11, a biometric data enrollment process portion 12, a communication control portion 13, a dummy data generating portion 14, a biometric data matching process portion 15, and a biometric data storage 16.

As illustrated in Fig. 2, the biometric authentication server 10 includes a CPU 101, a RAM 102, a ROM 103, a storage device 104, and a display device 105.

The CPU 101 executes an OS and other various programs, which are stored in the ROM 103 and the storage device 104, thereby performing various kinds of processing operations and control. In the biometric authentication system 1 a according to the first embodiment, the CPU 101 functions as the biometric data saving/managing portion 11, the biometric data enrollment process portion 12, the communication control portion 13, the dummy data generating portion 14, and the biometric data matching process portion 15 by executing the biometric authentication program and the biometric information processing program, which are stored in the storage device 104, etc.

The ROM 103 stores various kinds of data and programs. The RAM 102 temporarily stores data, programs, etc. when the CPU 101 executes the processing operations, etc.

The storage device 104 stores various kinds of data and programs, and it is constituted by, e.g., a HDD (Hard Disk Drive). The display device 105 displays the results of the processing operations executed by the CPU 101 and the information to be presented to the operator.

While Figs. 1 and 2 illustrate, for convenience of explanation, an example in which one biometric authentication server 10 and one client terminal 20 are included in the biometric authentication system 1 a, the biometric authentication system 1 a may include a plurality of client terminals 20 having similar configurations.

In the first embodiment, the person to be identified by authentication makes enrollment of the fingerprint information from the client terminal 20 and performs authentication (fingerprint authentication) based on the enrolled fingerprint by using the same client terminal 20.

In the following description, a process in which the person to be identified by authentication inputs the fingerprint information in the biometric authentication system 1a to make enrollment of an enrolled template (described later) is called an enrollment process. A process in which the person to be identified by authentication inputs the fingerprint information to verify a match with the enrolled template, which has been enrolled in advance, for the authentication is called a authentication process.

The biometric information input portion 28 is used to input, as biometric information, a fingerprint image (fingerprint information) of the person to be identified by authentication, and the fingerprint sensor 206 functions as the biometric information input portion 28.

In each of the enrollment process and the authentication process, the person to be identified by authentication inputs the fingerprint information in the biometric authentication system 1a by using the biometric information input portion 28. Thus, in the enrollment process, the biometric information input portion 28 functions as an enrollment-purpose biometric information obtaining portion, which obtains the biometric information of the person to be identified by authentication to execute the enrollment process. Also, in the authentication process, the biometric information input portion 28 functions as an authentication-purpose biometric information obtaining portion, which obtains the biometric information of the person to be identified by authentication to execute the authentication process.

The sensor control portion 21 executes control of the biometric information input portion 28. The sensor control portion 21 further executes pre-processing, which serves to extract feature points, on the biometric information (fingerprint information) input through the biometric information input portion 28. More specifically, the sensor control portion 21 executes, as pre-processing, rough alignment of a fingerprint image, narrowing of fingerprint ridges, etc. When biometric information other than the fingerprint is used, the sensor control portion 21 executes pre-processing adapted for the biometric information used.

The feature point extracting portion 22 is to extract the feature points from the biometric information that has been subjected to the pre-processing in the sensor control portion 21. In the following description, the feature points extracted by the feature point extracting portion 22 from the biometric information of the person to be identified by authentication are also referred to as "true feature points".

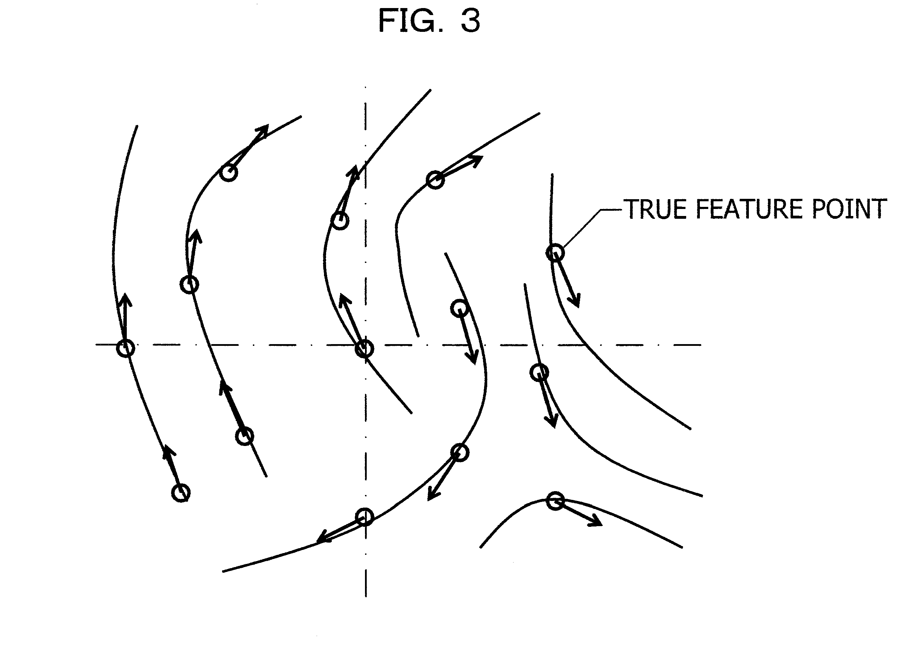

Fig. 3 is an illustration to explain the true feature point. An example illustrated in Fig. 3 indicates a plurality of feature points along with ridges of a fingerprint. The feature points are each, e.g., a ridge ending point or a bifurcation point of the fingerprint. In this embodiment, the feature point is represented by a position (coordinates) and a direction (orientation) thereof. In the following description, information representing the position and the direction of the feature point is referred to as "feature point information". Also, in the drawings, the feature point is represented by a circle, and the direction of the feature point is represented by an arrow extending from the center of the circle.

A process until extracting the feature points from the biometric information can be practiced by using various known methods, and hence a detailed description of such a process is omitted here.

In the enrollment process, the feature point extracting portion 22 generates, as the true feature points for enrollment, a plurality of feature points from the fingerprint information obtained through the biometric information input portion 28. Thus, the feature point extracting portion 22 functions as an enrollment-purpose feature point generating portion.

In the authentication process, the feature point extracting portion 22 generates, as the true feature points for authentication, a plurality of feature points from the fingerprint information obtained through the biometric information input portion 28. Thus, the feature point extracting portion 22 also functions as an authentication-purpose feature point generating portion.

The dummy data generating portion 14 generates a plurality of false feature points having random coordinates and random directions. For example, the dummy data generating portion 14 has a random-number generating function and generates the position and the direction of each false feature point based on random numbers generated with the random number generating function.

Further, when generating the false feature points, the dummy data generating portion 14 generates a larger number of false feature points than the true feature points which have been extracted by the feature point extracting portion 22.

False feature point information regarding the positions and the directions of the false feature points generated by the dummy data generating portion 14 is transmitted to the client terminal 20 through the communication control portion 13.

The communication control portions 13 and 25 serve to control data communication between the biometric authentication server 10 and the client terminal 20. The communication control portion 13 executes, in the biometric authentication server 10, control for transferring data with respect to the client terminal 20 through the communication line 301. Similarly, the communication control portion 25 executes, in the client terminal 20, control for transferring data with respect to the biometric authentication server 10 through the communication line 301.

The communication line 301 is to interconnect the client terminal 20 and the biometric authentication server 10 in a manner permitting communication therebetween. The communication line 301 is implemented by using, e.g., a LAN (Local Area Network) cable.

The feature point mixing control portion 23 is to generate an enrolled template and a set of false feature points based on both the true feature points generated by the feature point extracting portion 22 and dummy data (false feature points) generated by the dummy data generating portion 14.

As illustrated in Fig. 1, the feature point mixing control portion 23 has functions executed by an allowable range determining portion 231 and a feature point mixing process portion 232. The allowable range determining portion 231 is to set range information regarding an allowable range with respect to the feature point (feature point information). In the biometric authentication system 1a according to this first embodiment, regarding the position and the direction in the feature point information, an angle (i.e., a range angle or an allowable angle) and a length (i.e., a range length or an allowable length) are set as the range information.

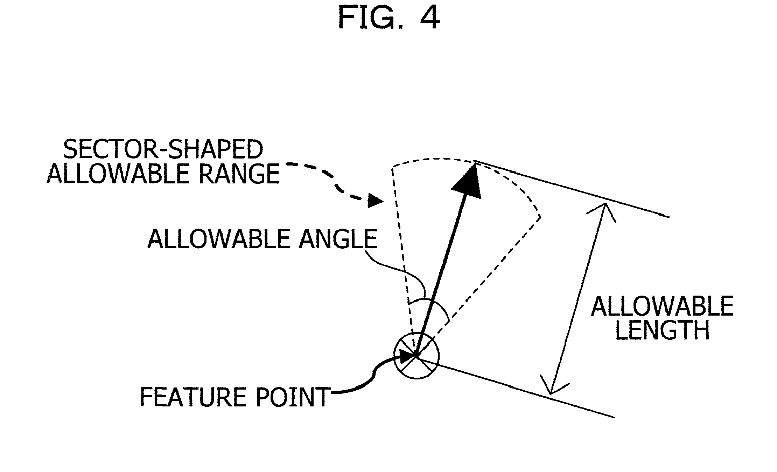

Fig. 4 is an illustration to explain the allowable range set for the feature point in the biometric authentication system as one example of the first embodiment. In the biometric authentication system 1 a according to this first embodiment, the allowable range is defined, as illustrated in Fig. 4, in the form of sector having a certain radius and a certain central angle. More specifically, the range information represents a sector-shaped allowable range which has a center of a circular arc defined at the "position (coordinates)" of the feature point, a radius defined by the "allowable length", and a central angle defined by the "allowable angle" with the "direction" being at a center (bisector) thereof.

The sector-shaped allowable range is defined by the allowable length and the allowable angle. The allowable length is to control the number (quantity) of feature points included in the allowable range, and the allowable angle is to primarily absorb a discrepancy of the coordinates in the feature point information that is input in a matching process.

In the following description, the allowable angle and the allowable length to set the sector-shaped allowable range are also called "range information". In this first embodiment, common range information is used for both the true feature point and the false feature point regarding the fingerprint information of the same person to be identified by authentication. Further, the range information is set by an allowable range determining portion 231 in the feature point mixing control portion 23 (described later).

While the range information of the allowable range may be provided by values that have been optionally set in advance, the range information is preferably set based on the biometric information.

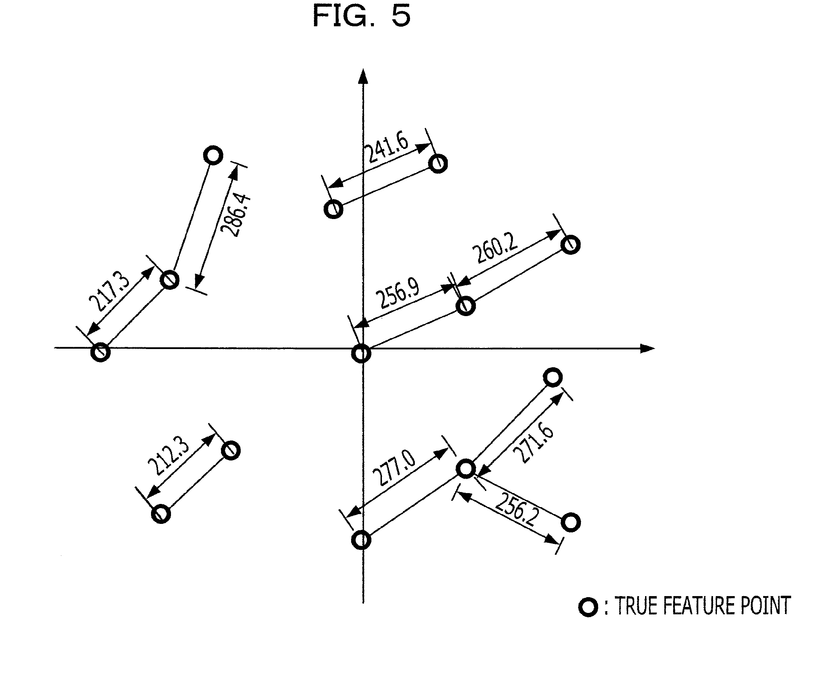

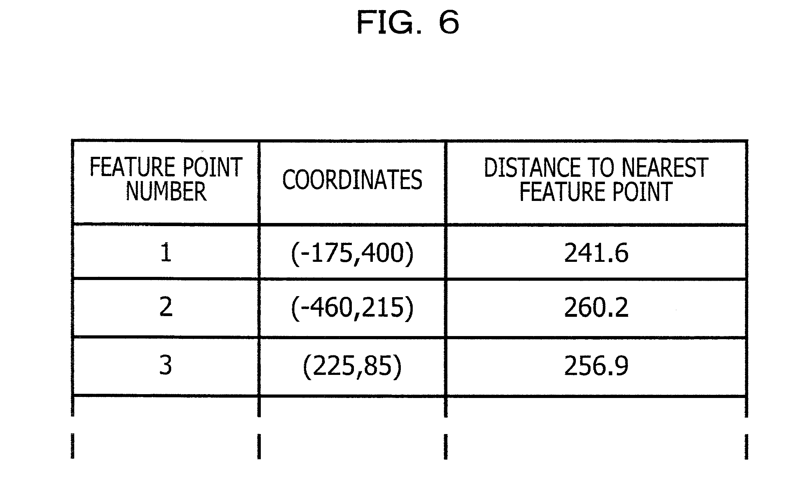

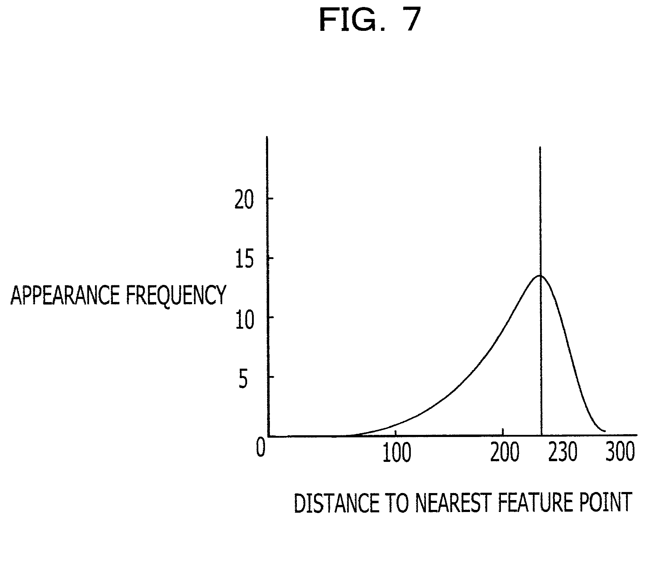

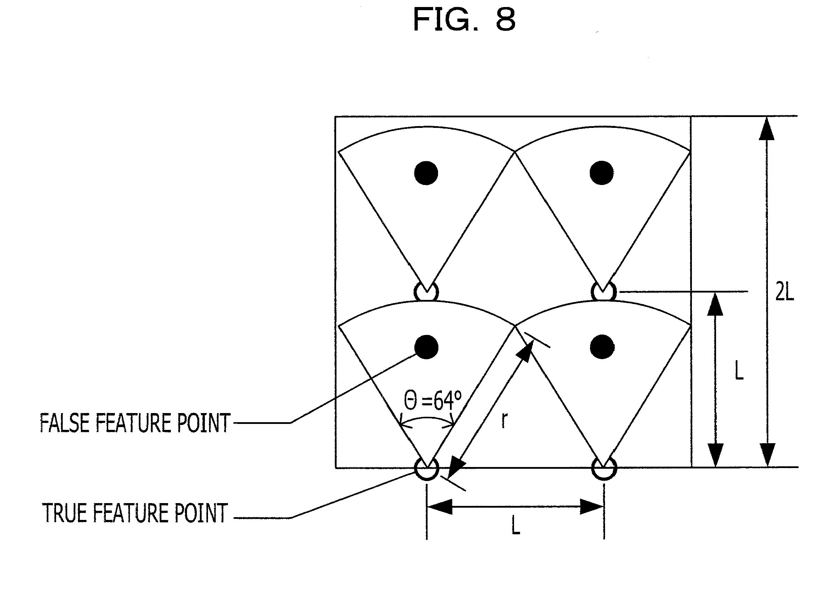

Figs. 5 to 8 are to explain a method of setting the sector-shaped allowable range in the biometric authentication system 1 a as one example of the first embodiment. Fig. 5 illustrates a distance between feature points on a virtual coordinate plane. Fig. 6 illustrates a distance to a nearest feature point for each feature point. Fig. 7 is a graph illustrating a distribution of appearance frequency of the distance to the nearest feature point illustrated in Fig. 6. Fig. 8 is an illustration to explain the method of setting the range information.

More specifically, Fig. 5 indicates, for each of the feature points illustrated in Fig. 3, the distance between the relevant feature point and another nearest feature point (i.e., the distance to the nearest feature point). Fig. 6 indicates, for some of the feature points illustrated in Fig. 5, the position of each feature point and the distance to the nearest feature point. Further, in an example illustrated in Fig. 6, a specific feature point number is assigned to each feature point as ID information to specify the relevant feature point. While natural numbers (1, 2, 3, etc.) are assigned as the feature point numbers in the example illustrated in Fig. 6, the feature point numbers are not limited to natural numbers.

In the biometric authentication system 1 a according to this first embodiment, the range information is set when the fingerprint information of the person to be identified by authentication is enrolled. The allowable range determining portion 231 determines the range information based on the biometric information input through the biometric information input portion 28. More specifically, in the enrollment process, the allowable range determining portion 231 examines, for each feature point, the distance to the nearest feature point based on the coordinate distribution of the true feature points, which has been extracted by the feature point extracting portion 22. Further, the allowable range determining portion 231 calculates an average value L of the examined distances to the nearest feature points based on the appearance frequency of the distance to the nearest feature point, as illustrated in Fig. 7.

Also, assuming the preset allowable angle to be θ, the allowable range determining portion 231 calculates an allowable length $r$ by multiplying the calculated average value L by $1/(2\sin(θ/2))$. In an example illustrated in Fig. 8, four true feature points are arranged at equally-spaced intervals (L) in a vertical direction (i.e., an up-and-down direction as viewed on a drawing sheet) and a horizontal direction (i.e., a right-and-left direction as viewed on the drawing sheet) such that those four true feature points (denoted by white circles) are arranged at lattice points of an equally-spaced lattice. Also, in the example illustrated in Fig. 8, respective directions of the four true feature points are oriented in the same direction (upwards as viewed on the drawing sheet) and respective allowable ranges of those four feature points are arranged so as not to overlap with each other. Further, in the example illustrated in Fig. 8, false feature points (denoted by black circles) are generated at the same density as that of the true feature points, and four false feature points are arranged in a lattice pattern at the same intervals as those of the equally-spaced lattice defined by the four true feature points. The four false feature points are arranged within the allowable ranges of the corresponding true feature points, respectively.

Assuming in the information illustrated in Fig. 8 that the interval between the lattice points is L, the allowable angle of the sector is θ, and the allowable length is r, there is a relationship of:

$$L = 2r \sin(\theta/2) \qquad \ldots(1)$$

Therefore, an area S of a square having one side with a length of 2L and including the allowable ranges of the four true feature points is represented by:

$$S = 16(r \sin(\theta/2))^2 \qquad \ldots(2)$$

On the other hand, because a total area of the four sectors is $D = \pi r^2(\theta/90)$, θ at which D is a half of S (= $4L^2$) is 63.55 degrees. Accordingly, an area ratio of D to S is about 50% when θ is 64 degrees, about 39% when θ is 90 degrees, and about 67% when θ is 45 degrees. In this first embodiment, θ is assumed to be 64 degrees for convenience of explanation. Be it noted that the angle of θ is not limited to 64 degrees and may be set to some other suitable value. In such a case, the density at which the false feature points are generated is preferably adjusted as described later.

Further, the allowable length r is nearly equal to 0.944L from the above-mentioned formula (1). Although the feature points are actually spaced at different intervals, it is preferable to examine, for each feature point, the distance to the nearest feature point based on the input coordinate distribution of the feature points and to extract and determine the most-frequently appearing distance, as described above with reference to Figs. 5 to 7.

Further, in the example illustrated in Fig. 8, the false feature points are all captured (included) within the sector-shaped allowable ranges set for the true feature points. In practice, however, an area ratio needs to be taken into consideration for the reason that the coordinates of the false feature points and the directions of the true feature points are random. In Fig. 8, because the area ratio is 50%, the false feature points in the same number as the true feature points can be captured by generating the false feature points at a density about twice that of the true feature points. In addition, the number of true feature points captured by the false feature points can be similarly reduced to a half by considering the true feature points and the false feature points in a replaced way. The number of false feature points and the number of true feature points can be balanced by additionally generating the false feature points when deletion of the extra true feature points is insufficient, or by regenerating the false feature points and reselecting the true feature points when the extra true feature points are overly deleted.

Generally, in the biometric authentication, even when the same biometric information is input, the exactly same feature point information cannot be obtained. Such an event is called "fluctuations of input". In the biometric authentication system 1a, the fluctuations of input can be absorbed by assigning the sector-shaped allowable range to the feature point information.

The allowable length and the allowable angle (i.e., the range information), which have been determined by the allowable range determining portion 231, are stored in the dummy data storage 27 through the dummy data selecting/saving portion 26 along with a later-described set of false feature points. The range information is used to assign the sector-shaped allowable range in the enrollment process and the authentication process.

The feature point mixing process portion (enrollment-purpose first selection portion) 232 executes the following operation in the enrollment process in which the biometric information of a user is enrolled in the biometric authentication system 1 a. Namely, the feature point mixing process portion 232 executes a first selection step (enrollment-purpose first selection step) of selecting two or more false feature points (false feature points to be selected), which are used in mixing with the true feature points, from among a plurality of false feature points generated by the dummy data generating portion 14.

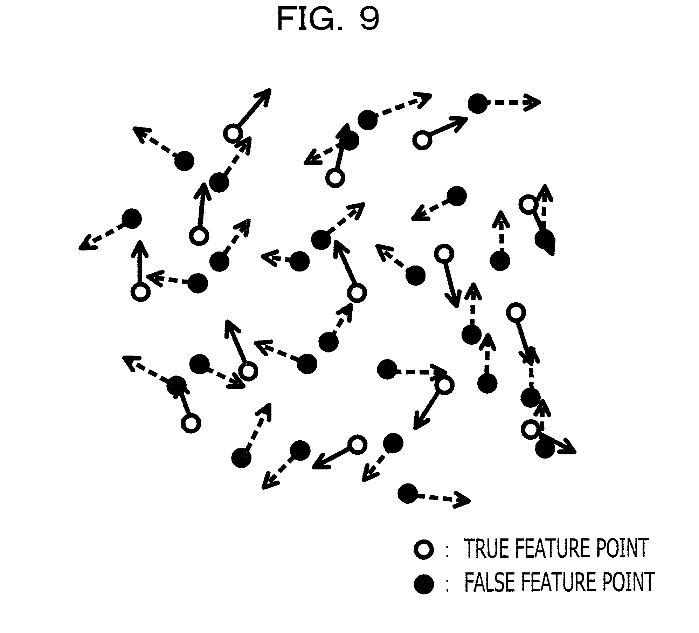

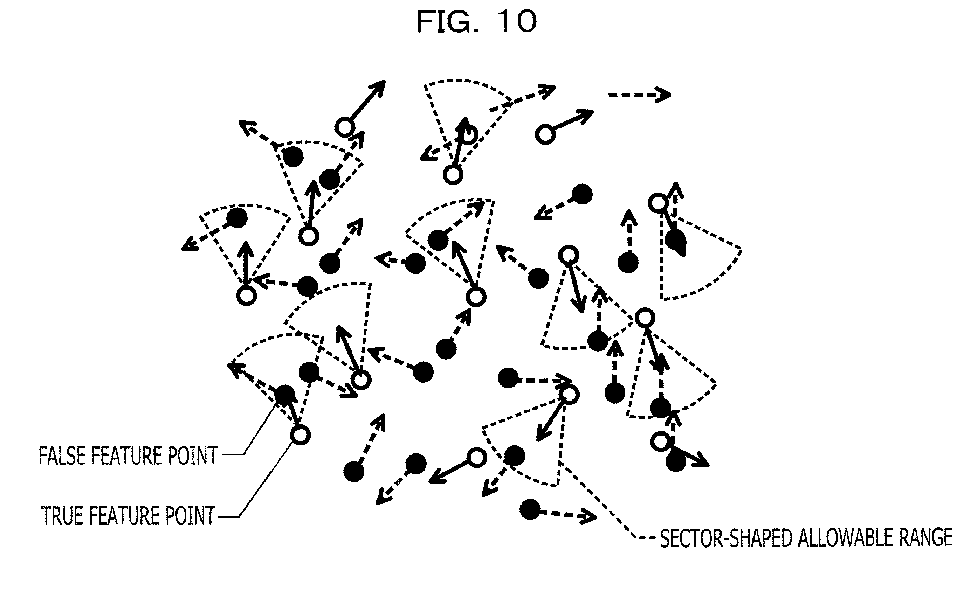

Figs. 9 to 11 are each an illustration to explain the first selection step in the biometric authentication system 1a as one example of the first embodiment. In examples illustrated in Figs. 9 to 11, dummy data (i.e., a plurality of false feature points) generated by the dummy data generating portion 14 and a plurality of true feature points generated by the feature point extracting portion 22 are arranged on a virtual coordinate plane. Also, in Figs. 9 to 11, the true feature points are represented by white circles, and the false feature points are represented by black circles. Further, in the example illustrated in Fig. 10, the allowable ranges are indicated for some of the true feature points.

The feature point mixing process portion 232 arranges the plurality of true feature points, which have been generated by the feature point extracting portion 22, on the virtual coordinate plane and adds the dummy data (i.e., the plurality of false feature points), which have been generated by the dummy data generating portion 14, onto the virtual coordinate plane as illustrated in Fig. 9.

Further, as illustrated in Fig. 10, the feature point mixing process portion 232 sets (assigns) the sector-shaped allowable range for each of the true feature points on the virtual coordinate plane based on the range information that has been determined by the allowable range determining portion 231. Thus, the feature point mixing process portion 232 functions as a range information setting portion for setting the range information for each of the feature points.

The feature point mixing process portion 232 examines a state that each false feature point is included within the allowable range for each of the true feature points on the virtual coordinate plane, and sets, as the feature points to be selected, those ones among the plurality of false feature points (dummy data) which are included (located) within the allowable ranges of the true feature points. In the following description, the plurality of false feature points to be selected, which are selected as mentioned above, are also referred to as a "set of false feature points or false feature point set (false feature point group)".

Then, the feature point mixing process portion 232 deletes those ones (extra false feature points) among the plurality of false feature points other than the false feature points to be selected on the virtual coordinate plane.

In the example illustrated in Fig. 10, the false feature points included within the sector-shaped allowable ranges of the true feature points become the false feature points to be selected. In Fig. 10, for simplification of the drawing, the allowable ranges for some of the true feature points are omitted.

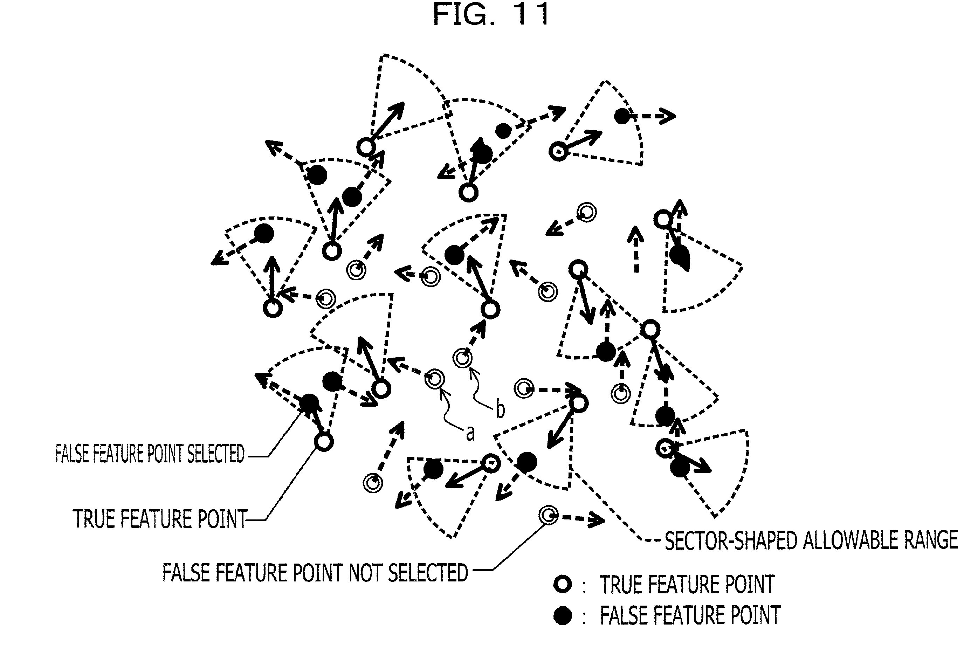

Further, in Fig. 11, the extra false feature points deleted by the feature point mixing process portion 232 are denoted by double circles. In Fig. 11, for simplification of the drawing, the allowable ranges for some of the true feature points are omitted.

In addition, the feature point mixing process portion (enrollment-purpose second selection portion) 232 executes a second selection step (enrollment-purpose second selection step) of selecting, from among the plurality of true feature points extracted by the feature point extracting portion 22, two or more true feature points (true feature points to be selected) based on the allowable ranges of the selected false features points, i.e., of the false feature points to be selected.

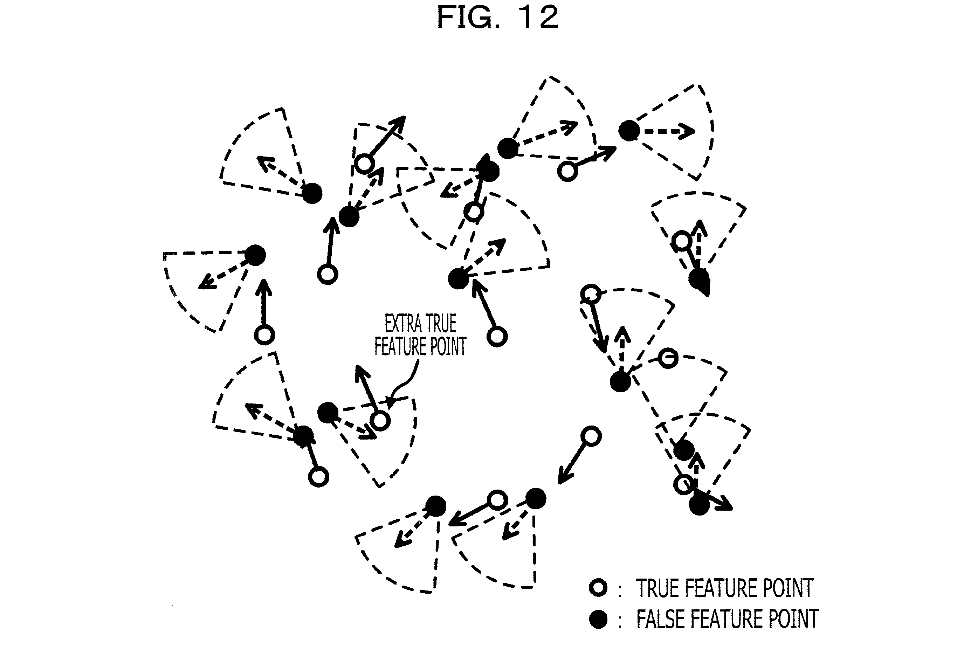

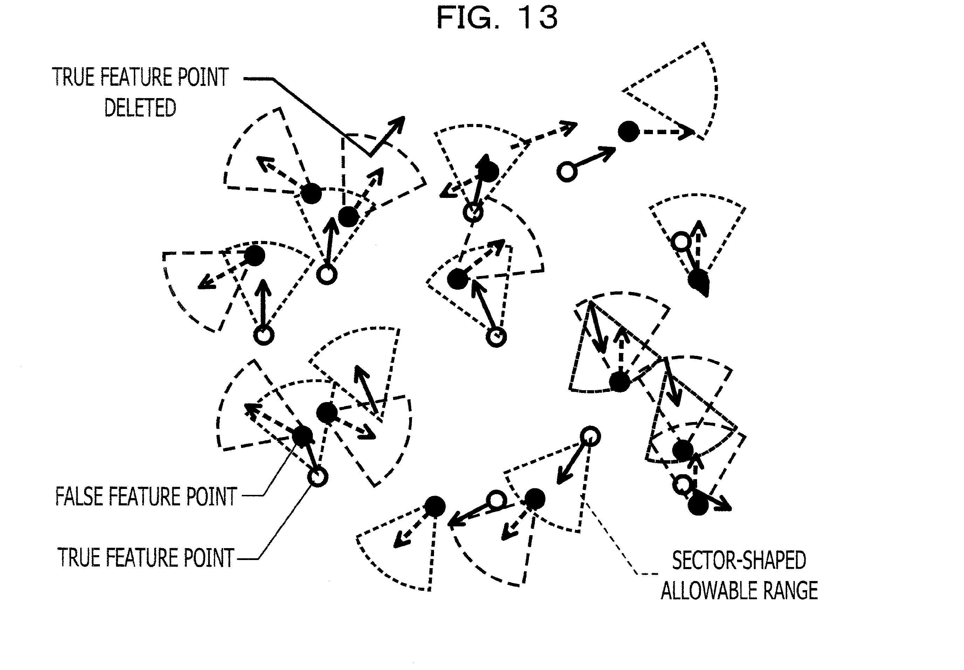

Figs. 12 and 13 are each an illustration to explain the second selection step in the biometric authentication system as one example of the first embodiment. In an example illustrated in Fig. 12, the plurality of true feature points generated by the feature point extracting portion 22 and the set of false feature points selected in the first selection step are arranged on the virtual coordinate plane. Also, in Figs. 12 and 13, the true feature points are represented by white circles, and the false feature points are represented by black circles. Further, in an example illustrated in Fig. 13, the allowable ranges are indicated for some of the true feature points.

As illustrated in Fig. 12, the feature point mixing process portion (range information setting portion) 232 sets the allowable range for each of the selected false feature points on the virtual coordinate plane.

Further, the feature point mixing process portion 232 examines a state that each true feature point is included within the allowable range set for each of the selected false feature points on the virtual coordinate plane, and regards, as extra true feature points, those ones among the plurality of true feature points which are included (located) within the allowable ranges of the selected false feature points.

In the example illustrated in Fig. 12, the true feature points included within the sector-shaped allowable ranges of the selected false feature points become the extra true feature points. In Fig. 12, for simplification of the drawing, the allowable ranges for some of the selected false feature points are omitted.

The feature point mixing process portion 232 deletes the extra true feature points on the virtual coordinate plane and sets, as the true feature points to be selected, those ones among the plurality of true feature points other than the extra true feature points. In the following description, the plurality of true feature points to be selected is also referred to as a "set of true feature points or true feature point set (true feature point group)".

In the example illustrated in Fig. 13, the true feature points not included within the sector-shaped allowable ranges of the selected false feature points become the true feature points to be selected. In Fig. 13, for simplification of the drawing, the allowable ranges for some of the selected false feature points are omitted.

Also, the feature point mixing process portion 232 executes a number adjustment such that the number of selected false feature points and the number of selected true feature points are exactly or almost equal to each other. In other words, the feature point mixing process portion 232 makes the number of selected false feature points and the number of selected true feature points even in density by adjusting the number of selected false feature points and the number of selected true feature points to be exactly or almost equal to each other.

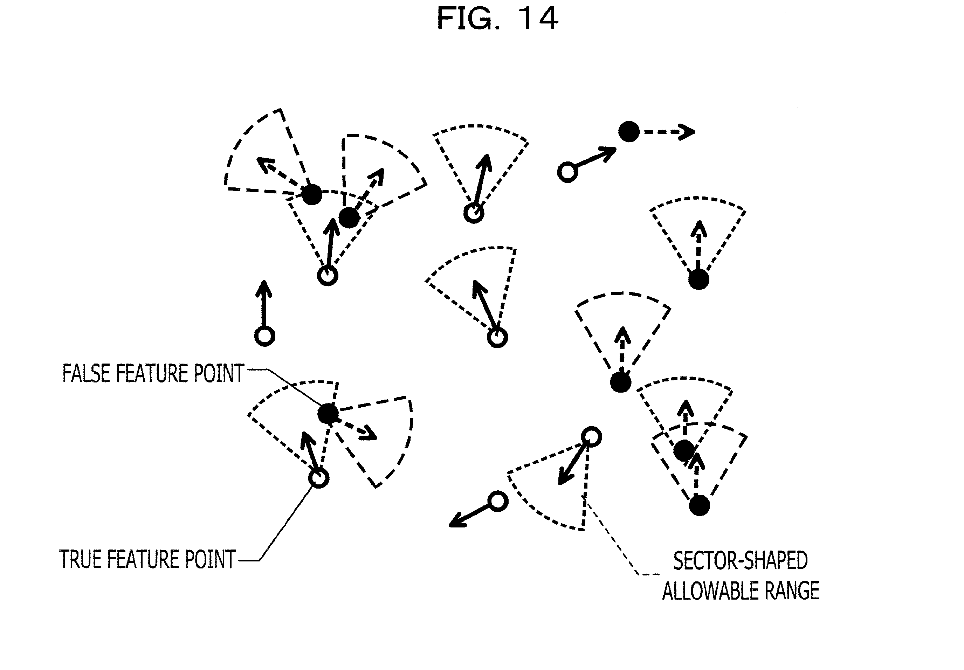

Fig. 14 is an illustration to explain a method of deleting the selected false feature point in the biometric authentication system 1 a as one example of the first embodiment. In an example illustrated in Fig. 14, some of the selected false feature points are deleted from the state, illustrated in Fig. 13, so that the number of selected false feature points and the number of selected true feature points become almost equal to each other.

Choosing of the selected false feature to be deleted can be made by using one of various methods. For example, the selected false feature points to be deleted may be chosen at random from among the plurality of selected false feature points, or may be chosen in an ascending order or a descending order of the ID information (e.g., the feature point number; see Fig. 6) that is set in advance for management of the feature points.

When the number of true feature points deleted is insufficient as a result of deleting the extra true feature points in the second selection step, the dummy data generating portion 14 is instructed to additionally generate the false feature points. On the other hand, when the true feature points are overly deleted, the false feature points are regenerated by the dummy data generating portion 14 and the extra true feature points are reselected. As a result, the number of selected false feature points and the number of selected true feature points can be balanced. Stated another way, it is preferably that the generation of the dummy data, the first selection step, and the second selection step are repeatedly executed until the set of true feature points and the set of false feature points are optimally balanced (e.g., almost equal in number).

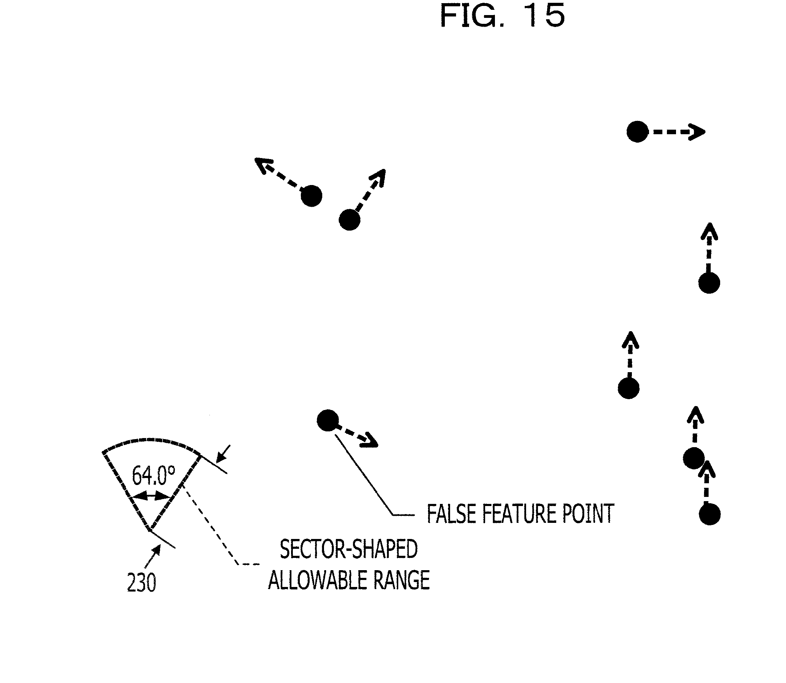

Fig. 15 is an illustration to explain the set of false feature points and the range information, which are generated in the biometric authentication system as one example of the first embodiment. In an example illustrated in Fig. 15, the range information determined by the allowable range determining portion 231 is indicated as the sector-shaped allowable range along with the set of false feature points generated by the feature point mixing process portion 232.

The feature point mixing process portion 232 instructs the dummy data selecting/saving portion 26 to save the generated set of false feature points and the generated range information in the dummy data storage 27 (described later). In this first embodiment, the set of false feature points and the range information are stored in the storage device 204 of the client terminal 20. For example, when there are plural persons to be identified by authentication, plural sets of false feature points and plural data of range information are stored in the dummy data storage 27.

In the authentication process, the feature point mixing control portion 23 executes matching of a plurality of true feature points extracted by the feature point extracting portion 22 based on the fingerprint information (biometric information) of the person to be identified by authentication, which has been input through the biometric information input portion 28, by using each of the plural sets of false feature points stored in the dummy data storage 27.

More specifically, the feature point mixing process portion 232 obtains one of the plural sets of false feature points stored in the dummy data storage 27 and the range information corresponding to the one set of false feature points. Then, the feature point mixing process portion 232 assigns the sector-shaped allowable range based on the range information for each of the false feature points making up the obtained false feature point set.

The feature point mixing process portion 232 examines a state that each of the plurality of true feature points extracted by the feature point extracting portion 22 is included within the allowable range set for each of the false feature points making up the false feature point on the virtual coordinate plane. In other words, the feature point mixing process portion 232 examines the number of true feature points which are included in the sector-shaped allowable ranges of the false feature points making up the false feature point set.

The feature point mixing process portion 232 examines the number of true feature points, which are included in the sector-shaped allowable ranges of the false feature points, for each of the plural sets of false feature points stored in the dummy data storage 27, and selects one set of false feature points providing the sector-shaped allowable ranges within which a maximum number of true feature points are included.

Then, the feature point mixing process portion 232 sets the sector-shaped allowable range for each of the true feature points on the virtual coordinate plane and deletes the false feature points not included in the sector-shaped allowable range. As a result, false feature points corresponding (equivalent) to the false feature points in the enrolled template (described later) are extracted.

Thereafter, the feature point mixing process portion 232 adds information of the remaining false feature points to the information of the true feature points. Also, the feature point mixing process portion 232 assigns the sector-shaped allowable range (range information) for each of the remaining false feature points on the virtual coordinate plane and deletes the true feature points included in the sector-shaped allowable range (range information).

Stated another way, the feature point mixing process portion 232 functions as an authentication-purpose first selection portion for selecting two or more among plural data of authentication-purpose true feature point information based on the range information set with respect to two or more data of false feature point information stored in the dummy data storage 27.

Further, the feature point mixing process portion 232 generates authentication-purpose feature point information based on the selected false feature points and the selected true feature points, both of which remain on the virtual coordinate plane. In practice, the feature point mixing process portion 232 generates the authentication-purpose feature point information by combining the feature point information regarding the selected false feature points and the feature point information regarding the selected true feature points.

Thus, the feature point mixing process portion 232 functions as an authentication-purpose mixed feature point information generating portion for generating authentication-purpose mixed feature point information based on both two or more data of true feature point information, which have been selected as described above, and two or more data of false feature point information stored in the dummy data storage 27.

The biometric data matching process portion 15 is to match the authentication-purpose mixed feature point information with the enrolled template (enrollment-purpose mixed feature point information described in detail later) that is stored in the biometric data storage 16. In the example illustrated in Fig. 1, the biometric data matching process portion 15 is included in the biometric authentication server 10 and matches the authentication-purpose mixed feature point information, which is transmitted from the client terminal 20, with the enrolled template stored in the biometric data storage 16.

Thus, in the biometric authentication system 1a, the authentication using the biometric information can be executed without using the passphrase or the like or without holding the transform parameters.

The matching of the authentication-purpose mixed feature point information with the enrolled template can be performed by using one of known various methods, and descriptions of those methods are omitted.

Further, the biometric data matching process portion 15 may execute one-to-one authentication for matching the authentication-purpose mixed feature point information with one data of the enrollment-purpose mixed feature point information stored in the biometric data storage 16, or one-to-many authentication for matching the authentication-purpose mixed feature point information with plural data of enrollment-purpose mixed feature point information.

The result of the match made by the biometric data matching process portion 15 is transmitted to the client terminal 20 via the communication control portions 13 and 25 and the communication line 301.

The enrollment/matching control portion 24 is to control, in the client terminal 20, transmission and reception of data for use in executing the enrollment and the match in the biometric authentication. More specifically, the enrollment/matching control portion 24 instructs the dummy data selecting/saving portion 26 to save the set of false feature points and the range information in the dummy data storage 27. Further, the enrollment/matching control portion 24 executes control for notifying the result of the biometric authentication to the user (i.e., the person to be identified by authentication) through the authentication result notifying portion 29.

The authentication result notifying portion 29 is to notify the result of the match made by the biometric data matching process portion 15 (described later) to the person to be identified by authentication. The notification is implemented by using, e.g., the display device 205 of the client terminal 20 or a loudspeaker (not shown). For example, when the result of the match is visually notified to the person to be identified by authentication, the authentication result notifying portion 29 displays image information, which represents the result of the match, on the display device 205. A method of generating the image information and various kinds of control necessary for displaying the generated image information on the display device 205 can be realized with the CPU 201 by using the known techniques, and hence they are not described here.

The dummy data storage 27 stores the set of false feature points and the range information, described above, in a readable manner. The dummy data storage 27 is implemented by using the storage device 204 of the client terminal 20.

The dummy data selecting/saving portion 26 is to control a process of saving (storing) data in the dummy data storage 27 and a process of reading data from the dummy data storage 27.

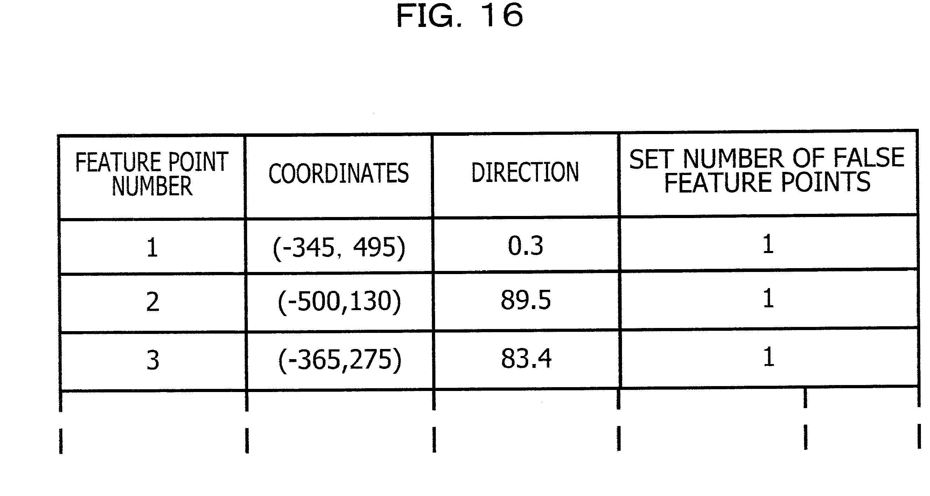

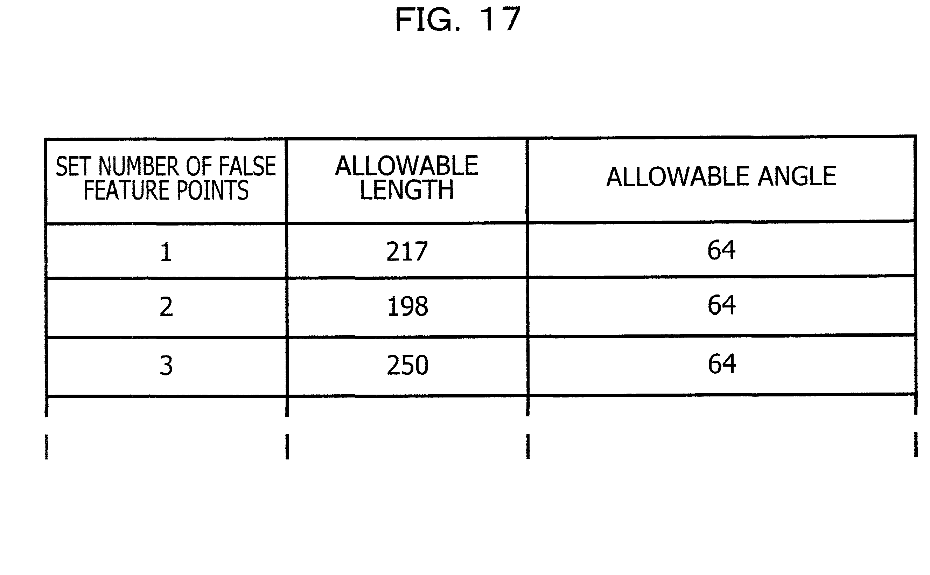

Fig. 16 is a table illustrating an example of the false feature point information that is stored in the dummy data storage 27 in the biometric authentication system 1a as one example of the first embodiment. Fig. 17 is a table illustrating an example of the range information that is stored in the dummy data storage 27 in the biometric authentication system 1 a as one example of the first embodiment.

In the biometric authentication system 1 a according to this first embodiment, when there are plural persons to be identified by authentication, the set of false feature points and the range information are generated for each of the persons to be identified by authentication (i.e., the enrolled users). Accordingly, the dummy data selecting/saving portion 26 stores the set of false feature points and the range information corresponding to the number of enrolled users. Further, in the biometric authentication system 1 a, a false feature point set number (e.g., a natural number) which is unique for each set of false feature points is set, as ID information, for identification of the false feature point set.

Thus, the false feature point information is stored in the dummy data storage 27 such that the plurality of feature points making up the false feature point set are assigned with the corresponding false feature point set numbers.

An example illustrated in Fig. 16 indicates that the false feature point represented by the feature point number "1" is positioned at coordinates (-345, 495), has a direction "0.3", and is included in the false feature point set number "1".

Also, the example illustrated in Fig. 17 indicates that the allowable range is set for each set of false feature points, and that the range information for the false feature point set number "1" has an allowable length of 217 and an allowable angle of 64 degrees.

Further, the feature point mixing process portion 232 saves, as the enrolled template, the set of false feature points and the set of true feature points, which are generated as described above, in the biometric authentication server 10 in correspondence to ID information (e.g., user ID) for identification of the enrolled user (i.e., the person to be identified by authentication). More specifically, the feature point mixing control portion 23 transmits the enrolled template to the biometric authentication server 10 via the communication control portion 25 and the communication control portion 13. In the biometric authentication server 10, the biometric data enrollment process portion 12 instructs the biometric data saving/managing portion 11 to store the enrolled template in the biometric data storage 16. Stated another way, the enrolled template is stored in the storage device 104 of the biometric authentication server 10.

Thus, the feature point mixing process portion 232 generates mixed feature points (enrollment-purpose mixed feature points) by mixing the set of false feature points and the set of true feature points with each other, which are obtained through the above-described two selection steps.

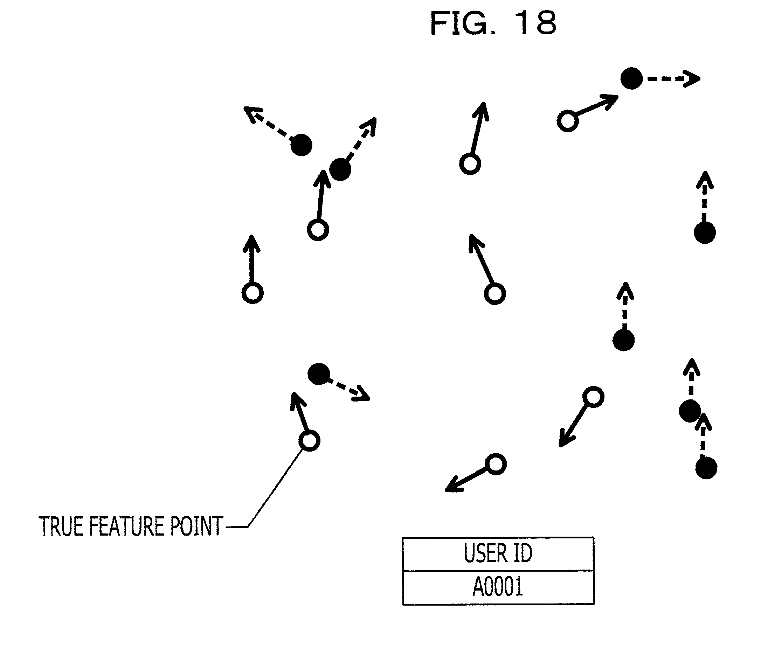

Fig. 18 is an illustration to explain the enrolled template in the biometric authentication system 1 a as one example of the first embodiment. Fig. 18 illustrates, by way of example, a state where the plurality of false feature points (i.e., the false feature point set) and the plurality of true feature points (i.e., the true feature point set) both included in the enrolled template are arranged on the virtual coordinate plane. Also, the example illustrated in Fig. 18 indicates the user ID "A0001" for the enrolled template along with the false feature point set and the true feature point set.

The biometric data storage 16 is to store the enrolled template and is constituted by the storage device 104 of the biometric authentication server 10. More specifically, the biometric data storage 16 stores the true feature point information regarding the true feature points making up the true feature point set and the false feature point information regarding the false feature points making up the false feature point set, which are both included in the enrolled template, in correspondence to the user ID.

The biometric data saving/managing portion 11 is to control a process of saving (storing) data in the biometric data storage 16 and a process of reading data from the biometric data storage 16.

The biometric data enrollment process portion 12 executes control for enrolling the enrolled template in the biometric data storage 16. For example, the biometric data enrollment process portion 12 stores the enrolled template in the biometric data storage 16 in correlation to information regarding the enrolled user (i.e., personal information, not shown), which is recorded in, e.g., the storage device 104. The personal information regarding the enrolled user can include various items such as the name and contact information. A detailed description of the personal information is omitted.

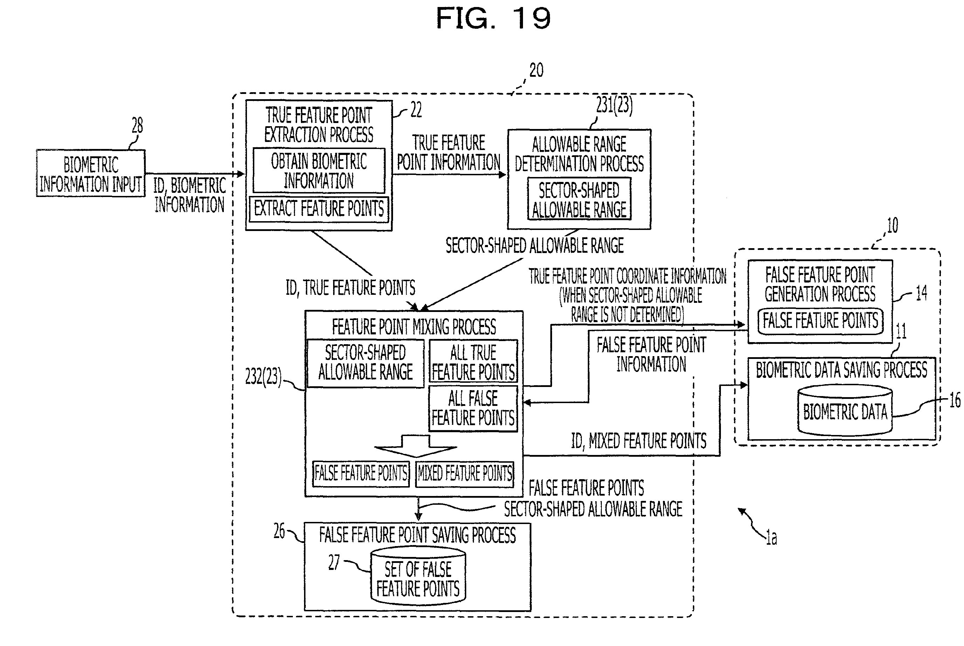

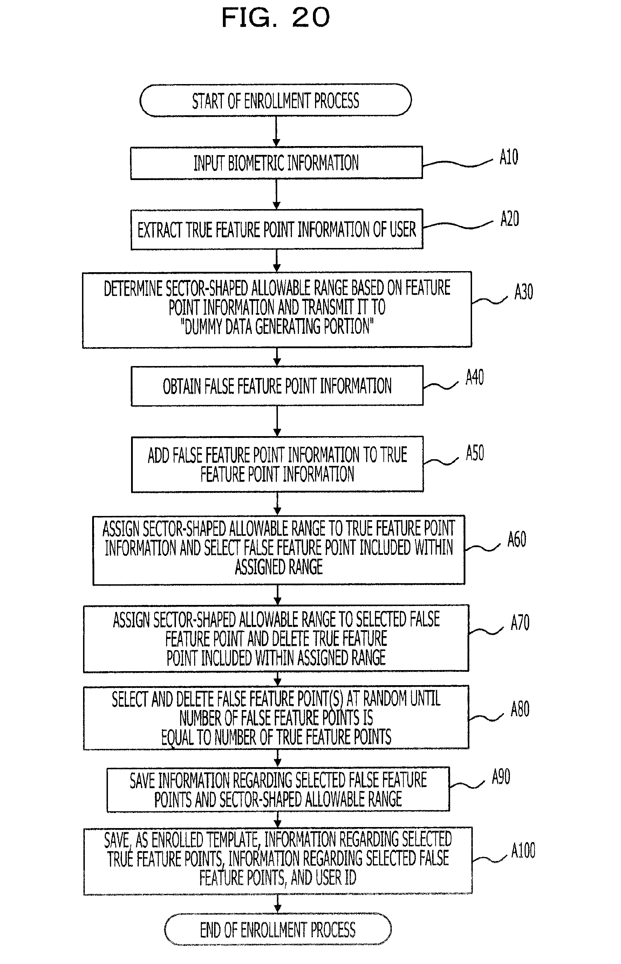

A process of enrolling the fingerprint information of the person to be identified by authentication in the biometric authentication system 1 a as one example of the first embodiment will be described below in accordance with a flowchart (steps A10 to A100) illustrated in Fig. 20 while referring to Fig. 19. Fig. 19 is a block diagram illustrating processing procedures when the enrollment process is executed in the biometric authentication system 1 a as one example of the first embodiment.

First, the person to be identified by authentication inputs the fingerprint information (biometric information) through the biometric information input portion 28 (step A10; enrollment-purpose biometric information input step). The sensor control portion 21 executes pre-processing, such as rough alignment of a fingerprint image and narrowing of fingerprint ridges, on the fingerprint information input through the biometric information input portion 28.

The feature point extracting portion 22 executes a true feature point extraction process based on the fingerprint information that has been subjected to the pre-processing in the sensor control portion 21 (step A20; enrollment-purpose feature point information generating step). The feature point extracting portion 22 obtains the true feature point information regarding all the true feature points.

In the feature point mixing control portion 23, the allowable range determining portion 231 executes an allowable range determination process. More specifically, the allowable range determining portion 231 determines, based on the true feature point information obtained in step A20, the sector-shaped allowable range (first range information determining step). The determined sector-shaped allowable range is transmitted to the dummy data generating portion 14 in the biometric authentication server 10 via the communication control portions 25 and 13 and the communication line 301 (step A30).

In the biometric authentication server 10, the dummy data generating portion 14 executes a false feature point generation process of generating dummy data (i.e., a plurality of false feature points) (dummy data generating step). The generated dummy data are transmitted to the feature point mixing control portion 23 in the client terminal 20 via the communication control portions 25 and 13 and the communication line 301 (step A40).

The feature point mixing process portion 232 executes a feature point mixing process. More specifically, the feature point mixing process portion 232 mixes (adds) the false feature points to all the true feature points (step A50; see Fig. 9). The feature point mixing control portion 23 assigns the sector-shaped allowable range for each of the true feature points on the virtual coordinate plane (range information setting step), and selects the false feature points included in the assigned allowable ranges (step A60; enrollment-purpose first selection step, see Fig. 10).

Then, the feature point mixing process portion 232 assigns the sector-shaped allowable range for each of the false feature points selected in step A60 (see Fig. 12; range information setting step), and deletes the true feature points included in the assigned allowable ranges (step A70; enrollment-purpose second selection step, see Fig. 13). Further, the feature point mixing process portion 232 deletes some of the selected false feature points to make an adjustment such that the number of selected true feature points and the number of selected true feature points are substantially equal to each other (step A80; feature point number adjusting step, see Fig. 14).

Then, the feature point mixing process portion 232 executes a false feature point saving process of causing both the information regarding the selected false feature points remaining on the virtual coordinate plane and the information regarding the sector-shaped allowable range (i.e., the range information; see Fig. 15) to be stored in the dummy data storage 27 (step A90; false feature-point group information storing step).

Further, the feature point mixing process portion 232 transmits the set of selected true feature points and the set of selected false feature points (i.e., mixed feature points), which remain on the virtual coordinate plane, to the biometric authentication server 10 along with the user ID for identification of the enrolled user (enrollment-purpose mixed feature-point information generating step). In the biometric authentication server 10, a biometric information saving process is executed to save, as the enrolled template, the set of selected true feature points and the set of selected false feature points in the biometric data storage 16 in correspondence to the ID information (e.g., the user ID) for identification of the enrolled user (step A100; enrollment-purpose mixed feature-point information storing step, see Fig. 18).

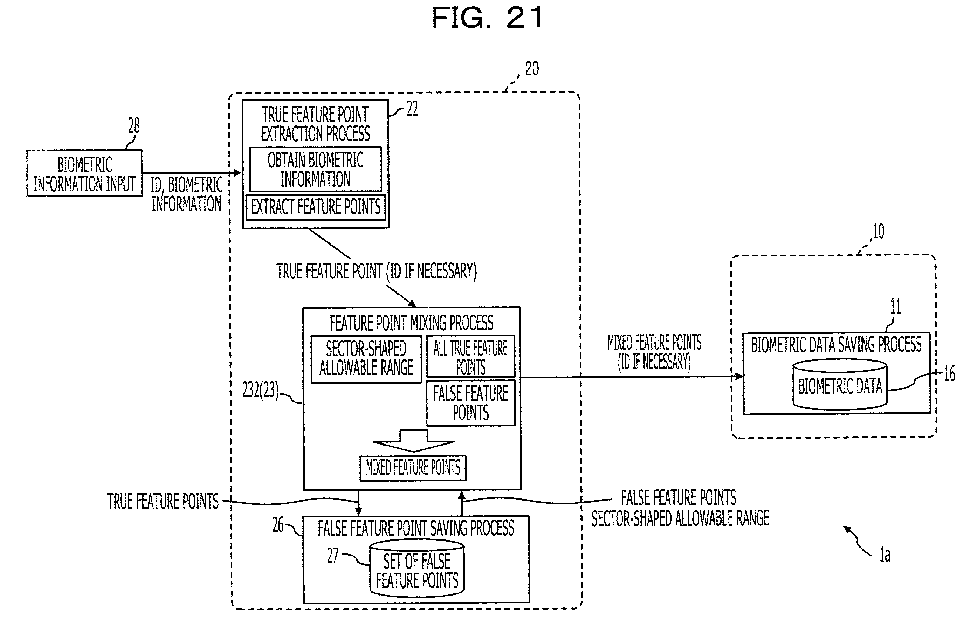

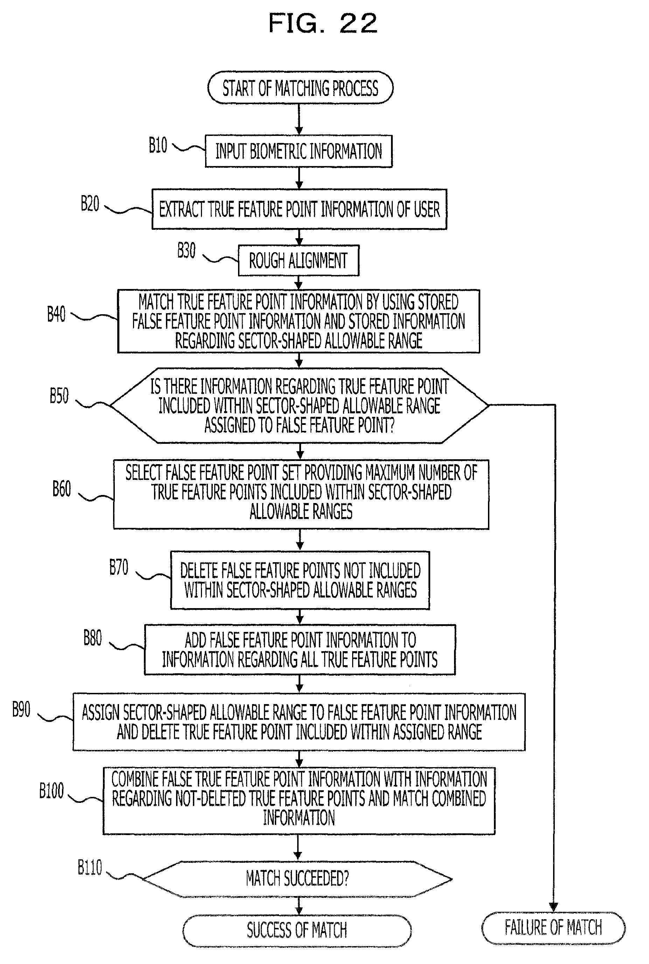

The authentication process using the fingerprint information of the person to be identified by authentication in the biometric authentication system 1a as one example of the first embodiment will be described below in accordance with a flowchart (steps B10 to B110) illustrated in Fig. 22 while referring to Fig. 21. Fig. 21 is a block diagram illustrating processing procedures when the authentication process is executed in the biometric authentication system 1 a as one example of the first embodiment.

First, the person to be identified by authentication inputs the fingerprint information (biometric information) through the biometric information input portion 28 (step B10; authentication-purpose biometric information input step). The feature point extracting portion 22 obtains the input fingerprint information (authentication-purpose biometric information obtaining step) and executes a true feature point extraction process based on the input fingerprint information (step B20; authentication-purpose feature point information generating step). The feature point extracting portion 22 obtains the true feature point information regarding all the true feature points. Further, the sensor control portion 21 executes pre-processing, such as rough alignment of a fingerprint image and narrowing of fingerprint ridges, on the fingerprint information (step B30).

The feature point mixing control portion 23 obtains plural sets of false feature points stored in the dummy data storage 27 and matches a plurality of true feature points extracted in step B20 with the feature point information and the range information regarding each set of false feature points (step B40).

The feature point mixing process portion 232 confirms, for each set of false feature points, whether true feature points are present within the sector-shaped allowable ranges assigned to the false feature points making up the relevant false feature point set (step B50). If, for all sets of false feature points, there are no true feature points within the sector-shaped allowable ranges assigned to the false feature points making up the false feature point set (see "NO" route from step B50), the feature point mixing process portion 232 notifies the failure of the match to the enrollment/matching control portion 24. The enrollment/matching control portion 24 notifies the failure of the match to the authentication result notifying portion 29, and the authentication result notifying portion 29 notifies the failure of the authentication to the person to be identified by authentication, etc. (notifying step).

On the other hand, if there are true feature points within the sector-shaped allowable ranges assigned to the false feature points making up any false feature point set (see "YES" route from step B50), the feature point mixing process portion 232 examines the number of true feature points included in the sector-shaped allowable ranges of the false feature points making up each false feature point set. Then, the feature point mixing process portion 232 selects the false feature point set providing the sector-shaped allowable ranges within which a maximum number of true feature points are included (step B60; authentication-purpose second selection step).

The feature point mixing process portion 232 sets (assigns) the sector-shaped allowable range for each of the true feature points on the virtual coordinate plane (second range information setting step), and deletes the false feature points not included within the assigned allowable ranges (step B70).

Then, the feature point mixing process portion 232 adds information regarding the remaining (selected) false feature points to the true feature point information (step B80). Further, the feature point mixing process portion 232 sets (assigns) the sector-shaped allowable range for each of the false feature points on the virtual coordinate plane (range information setting step), and deletes the true feature points included within the assigned allowable ranges (step B90; authentication-purpose first selection step).

Then, the feature point mixing process portion 232 generates authentication-purpose feature point information by combining the feature point information regarding the selected false feature points remaining on the virtual coordinate plane and the feature point information regarding the true feature points (authentication-purpose mixed feature-point information generating step). The authentication-purpose feature point information is transmitted to the biometric authentication server 10 via the communication control portions 25 and 13 and the communication line 301, and is matched by the biometric data matching process portion 15 with the enrolled template stored in the biometric data storage 16 (step B100; matching step). If the match result (step B110) indicates that the match has not succeeded (see "NO" route from step B110), the feature point mixing process portion 232 notifies the failure of the match to the enrollment/matching control portion 24, and the authentication result notifying portion 29 notifies the failure of the match to the person to be identified by authentication, etc. (notifying step). In addition, upon the failure of the match (authentication), subsequent processing to be executed in the case of the match having succeeded is inhibited.

On the other hand, if the match has succeeded (see "YES" route from step B110), the feature point mixing process portion 232 notifies success of the match to the enrollment/matching control portion 24 (notifying step). The enrollment/matching control portion 24 notifies the success of the match to the authentication result notifying portion 29, and the authentication result notifying portion 29 notifies the success of the match to the person to be identified by authentication, etc. Further, the subsequent processing to be executed in the case of the match having succeeded is executed.

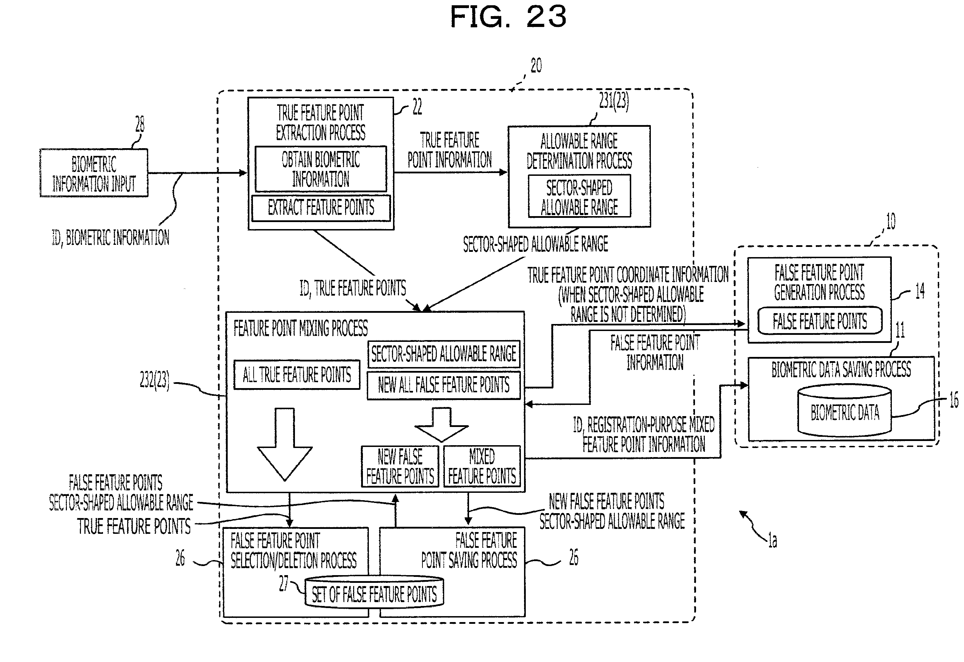

Fig. 23 is a block diagram illustrating processing procedures in the client terminal 20 and the biometric authentication server 10 when biometric information is re-enrolled in the biometric authentication system 1a as one example of the first embodiment.

When fingerprint information is re-enrolled, the set of false feature points is first selected as in steps B10 to B60 of Fig. 22. Then, the client terminal 20 executes a process of deleting the selected set of false feature points from the dummy data storage 27 (false feature-point group information deleting step).

Thereafter, processing similar to that in steps A30 to A100 in Fig. 20 is executed. With that processing, a set of newly selected false feature points and a new sector-shaped allowable range are stored in the dummy data storage 27. Also, a set of newly selected true feature points, the set of newly selected false feature points, and the user ID are stored, as a new enrolled template, in the biometric data storage 16 of the biometric authentication server 10.

Thus, in the biometric authentication system 1 a according to the first embodiment, the set of false feature points and the allowable range are stored in the client terminal 20, and the true feature points are not stored in the client terminal 20. Since the set of false feature points enrolled in the client terminal 20 is based on dummy data generated at random by the dummy data generating portion 14, the biometric information of the person to be identified by authentication cannot be restored from the set of false feature points. As a result, cancelable biometric information authentication with high security can be realized.

Whenever authentication is performed for the person to be identified by the authentication, the feature point mixing control portion 23 generates the authentication-purpose mixed feature point information based on the biometric information of the relevant person. It is therefore possible to realize the biometric authentication utilizing feature point information that changes whenever the feature point information is enrolled.

Since the allowable range determining portion 231 determines the range information based on the biometric information input through the biometric information input portion 28, the enrollment process and the authentication process can be executed with high efficiency. If the sector-shaped allowable range assigned to each feature point is too large, most of the true feature points are deleted in the above-described second selection step. On the other hand, if the sector-shaped allowable range is too small, the false feature points are hardly selected in the above-described first selection step. Namely, the necessity of generating the false feature points several times by the dummy data generating portion 14 deteriorates the efficiency.

In addition, since the range information determined by the allowable range determining portion 231 is provided as the sector-shaped allowable range having the allowable length and the allowable angle, the true feature points and the false feature points can be properly selected in the above-described first selection step and second selection step.

(B) Second Embodiment

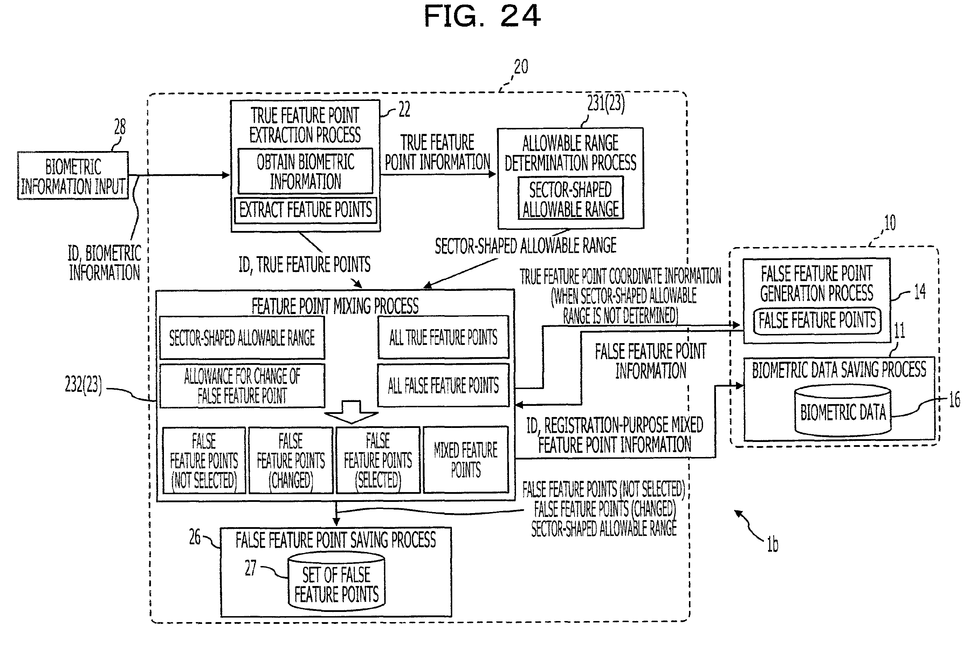

Fig. 24 is a block diagram illustrating processing procedures in the client terminal 20 and the biometric authentication server 10 when an authentication process is executed in a biometric authentication system 1b as one example of a second embodiment.

The biometric authentication system 1b according to the second embodiment has a function of making it difficult to find out the correspondence between the set of false feature points and the enrolled template in addition to the functions of the above-described biometric authentication system 1 a according to the first embodiment. The added function is to prevent part of the true feature points from being clarified by a third party.

The biometric authentication system 1b has a hardware configuration similar to that of the above-described biometric authentication system 1 a, and hence the hardware configuration of the biometric authentication system 1b is not described here. Further, the same reference characters in the following description as the already-mentioned ones denote exactly or substantially the same components, and hence they are not described here. In other words, the components not specifically described in the following are exactly or substantially the same as those in the biometric authentication system 1a according to the first embodiment. In the second embodiment, the set of false feature points and the set of true feature points are generated, by way of example, in a similar manner to that in the biometric authentication system 1 a.

In the biometric authentication system 1 b according to the second embodiment, when the extra false feature points are deleted by the feature point mixing process portion 232 in the above-described biometric authentication system 1 a (i.e., in the first selection step), the feature point information regarding the extra false feature points to be deleted (i.e., extra false feature point information) is held. In Fig. 24, the feature point mixing process portion 232 holds those false feature points (not selected).

All or part of the extra false feature point information is stored in, e.g., the storage device 204 of the client terminal 20. The extra false feature point information may be stored in any desired place. In this second embodiment, the extra false feature point information is stored in the dummy data storage 27.

Further, in the biometric authentication system 1b according to the second embodiment, when the feature point mixing process portion 232 stores the set of selected false feature points in the dummy data storage 27, the above-mentioned extra false feature points are combined with the set of selected false feature points. By adding the information regarding the not-selected false feature points to the set of selected false feature points, confusion is caused to make it difficult to find out the correspondence between the set of false feature points and the enrolled template.

The enrolled template generated by combining the set of false feature points with the set of true feature points is the same as that in the above-described biometric authentication system 1 a according to the first embodiment.

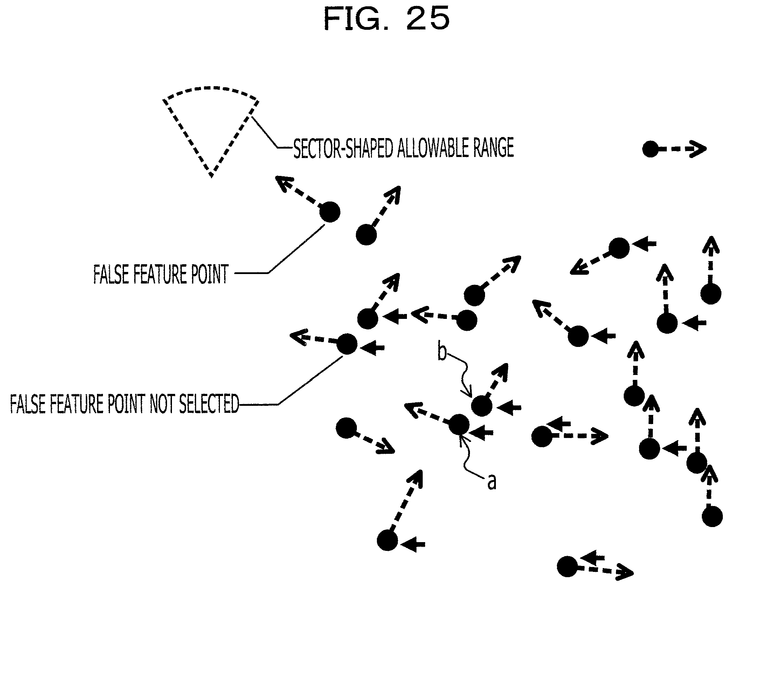

For example, in Figs. 11 and 25, the false feature points indicated by arrows a and b (i.e., the false feature points not selected) do not take part in selecting the true feature points. Those false feature points are suitable to cause confusion for making it difficult to find out the correspondence between the set of false feature points and the enrolled template.

Fig. 25 illustrates a state where the extra false feature points are combined with the set of selected false feature points in the biometric authentication system 1b as one example of the second embodiment. In Fig. 25, the extra false feature points having been combined with the set of selected false feature points are indicated by black circles attached with solid arrows.

Fig. 25 illustrates a state where, after deleting the information regarding the extra false feature points from the information regarding the selected false feature points in a similar manner to that described above with reference to Fig. 14, the information regarding all of the not-selected false feature points is stored in the client terminal 20.

While Fig. 25 illustrates an example in which the extra false feature points having not been selected are all combined (stored together) with the set of selected false feature points, only part of the extra false feature points may be combined.

Because the extra false feature points, which are deleted to adjust the number of true feature points and the number of false feature points, are determined at random, for example, they cannot be deleted in the authentication process. Accordingly, those extra false feature points are not held in any part of the biometric authentication system 1 b.

The biometric authentication server 10 stores the user ID and the feature point information that is obtained by combining those ones among the false feature points, which have been selected as described above with reference to Fig. 11, excepting the false feature points deleted to adjust the number of true feature points and the number of false feature points, with the true feature points excepting those true feature points which have been selected based on the selected false feature points. Such information is the same as that included in the enrolled template illustrated in Fig. 18, and the authentication process is not affected even when the information regarding the extra false feature points is stored in the client terminal 20 in addition to the set of selected false feature points.

In the biometric authentication system 1 b according to the second embodiment, comparing with the enrolled template stored in the biometric data storage 16 of the biometric authentication server 10, illustrated in Fig. 25, additional false feature points (i.e., the extra false feature points) are stored besides the set of false feature points stored in the dummy data storage 27.

However, in a stage where the false feature point information is selected by the feature point mixing control portion 23 based on the set of true feature points and the information regarding the not-selected false feature points is deleted during the authentication process, the extra false feature points are deleted together. Accordingly, the subsequent processing to be executed in the case of the match having succeeded is affected in no way.

In the biometric authentication system 1 b according to the second embodiment, the feature point mixing process portion (feature point editing portion) 232 has a false feature point changing function of moving the false feature point within a predetermined range. Moving the false feature point means that the feature point information (coordinates and direction) regarding the false feature point is changed. In the following description, therefore, it is assumed that moving the false feature point is equivalent to changing the feature point information of the false feature point.

Further, in the biometric authentication system 1b, the false feature point is moved within the predetermined range (i.e., within an allowance for change). More specifically, the feature point mixing process portion 232 changes the feature point information (coordinates and direction) of the relevant false feature point within the range not exceeding the preset allowance for change.

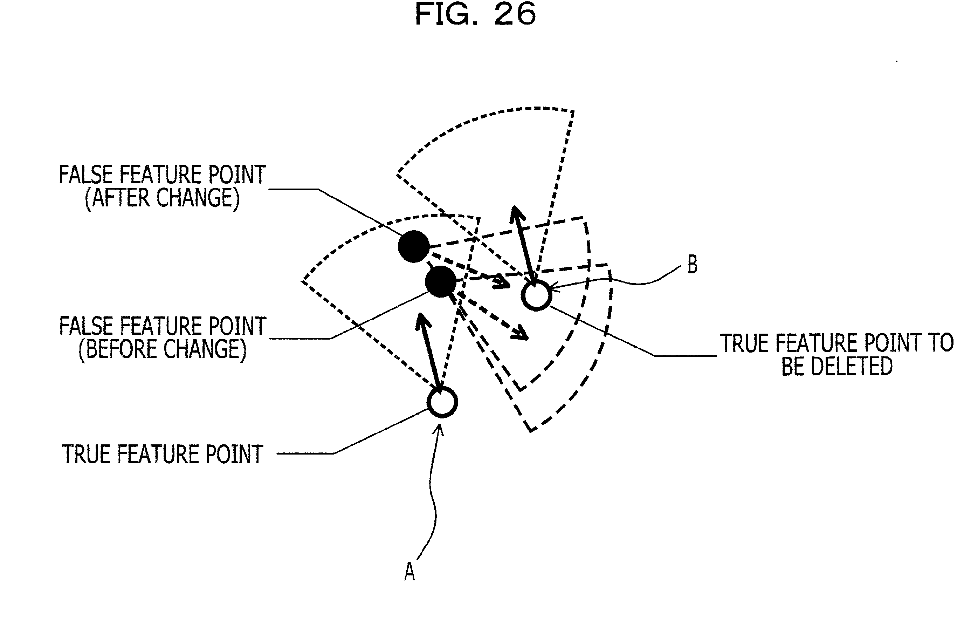

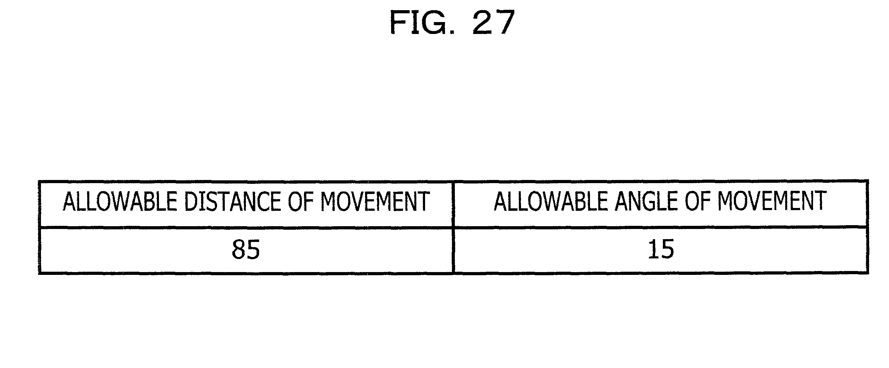

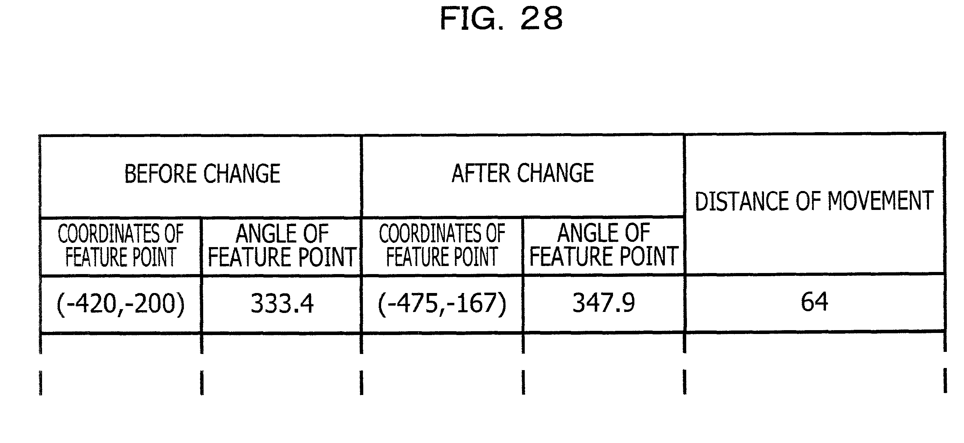

Fig. 26 is an illustration to explain the allowance for change of the false feature point in the biometric authentication system 1b as one example of the second embodiment, Fig. 27 is a table illustrating examples of the allowance for change, and Fig. 28 is a table to explain states before and after the false feature point is changed.

In the biometric authentication system 1b, as illustrated in Fig. 26, the false feature point is moved within the range not departing from the sector-shaped allowable range assigned to the true feature point having not been deleted (i.e., the selected true feature point). Stated another easy, the false feature point to be moved is moved within the sector-shaped allowable range assigned to the true feature point (see an arrow A in Fig. 26) within which the relevant false feature point is included. On that occasion, the false feature point to be moved is moved within the range that continues to include the extra true feature point (see an arrow B in Fig. 26) which is already included in the relevant sector-shaped allowable range. In addition, the false feature point is moved within the range in which the true feature point included within the relevant sector-shaped allowable range is not changed between before and after the movement of the relevant false feature point.

Because the change of the feature point information affects accuracy of authentication, respective allowances for change of the coordinates and the direction, i.e., respective ranges of the coordinates and direction allowable for an authentication engine used in the biometric authentication system 1b, are previously held in, e.g., the client terminal 20 as default values for the system, and the change of the feature point information is controlled to be changed within the allowable ranges. In the example illustrated in Fig. 24, the allowances for change of the false feature point are held in the feature point mixing process portion 232. This means that the feature point mixing process portion 232 controls read and write of the allowances for change, which are stored in the storage device 204, for example.

In an example illustrated in Fig. 27, an allowable distance of movement, given as "85", indicates the allowance for change of the coordinates of the feature point information, and an allowable angle of movement, given as "15", indicates the allowance for change of the direction (angle) of the feature point information.

In an example illustrated in Fig. 28, the false feature point positioned at coordinates (-420, -200) and having a direction (angle) of 333.4 is moved so as to have an angle of 347.9 at coordinates (-475, -167). Further, in the example illustrated in Fig. 28, the distance through which the false feature point has moved between before and after the movement is 64.

The feature point mixing control portion 23 transmits the set of false feature points before the change to the dummy data selecting/saving portion 26 such that the set of false feature points before the change is stored in the dummy data storage 27. Further, the feature point mixing control portion 23 transmits the enrolled template, which is generated by combining the set of false feature points after the change with the set of true feature points, to the biometric data saving/managing portion 11 in the biometric authentication server 10, whereby the enrolled template is stored in the biometric data storage 16.

Further, in the biometric authentication system 1b according to the second embodiment, when the biometric information of the person to be identified by authentication is enrolled repeatedly, the feature point mixing process portion 232 executes control as follows.

The feature point mixing process portion 232 executes control such that, in the second selection step of the enrollment process, the same true feature points are always selected repeatedly as the true feature points to be selected.

Because, in the biometric authentication system 1b, 50% of the true feature points are deleted in the enrollment process, the control needs to be executed to make the same true feature points remained. In order to make the same true feature point information as that in the previous enrollment process remained when re-enrolled, the control is executed so as to select such false feature points as canceling the information other than the true feature point information (i.e., the information regarding the selected true feature points) in the previous enrollment process.

When the authentication process is executed on the current enrolled template in the re-enrollment process, a set of false feature points is selected which differ from the enrolled set of false feature points, but which can make the same true feature points remained. In practice, the feature point mixing control portion 23 executes the control while comparing with the set of false feature points obtained from the dummy data selecting/saving portion 26.

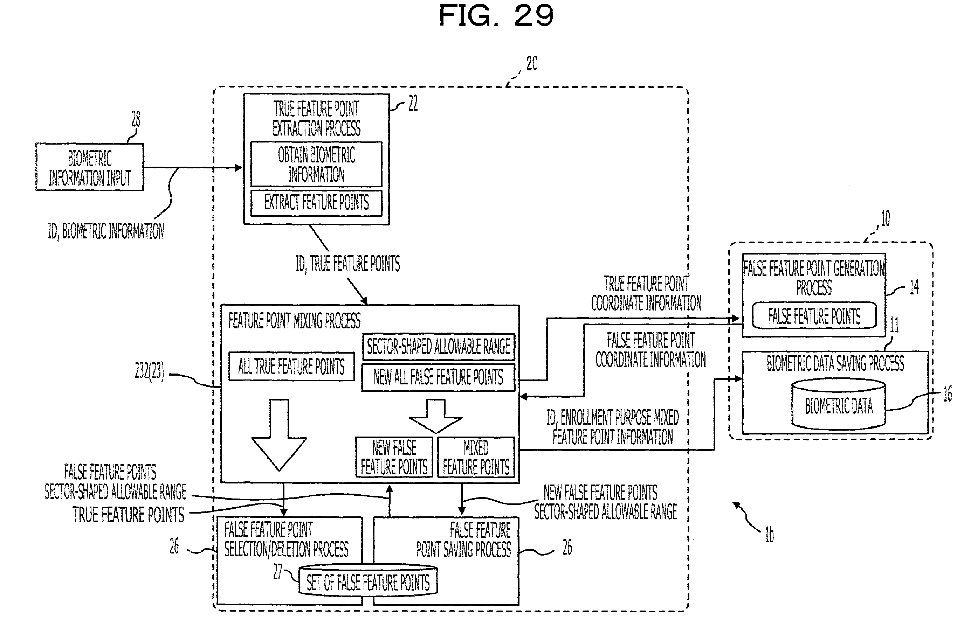

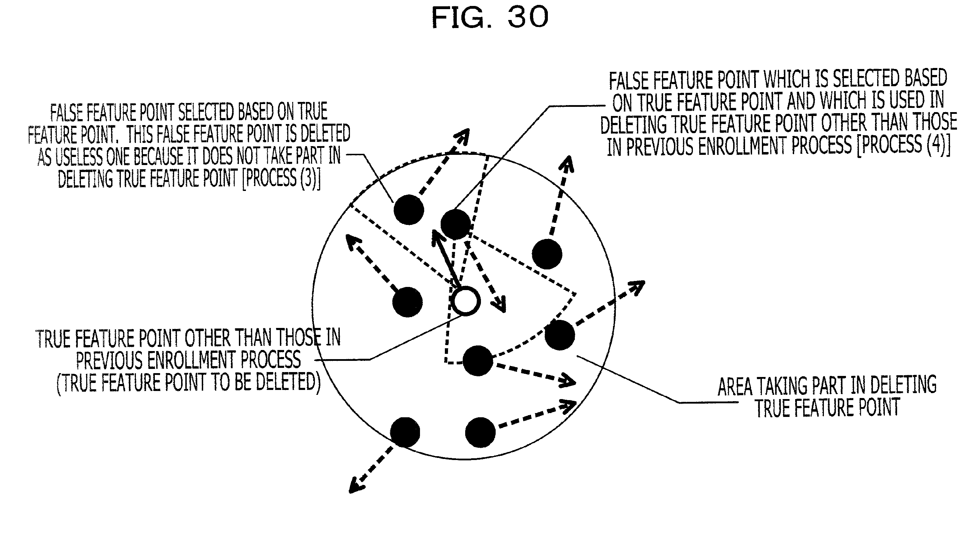

Fig. 29 is a block diagram illustrating processing procedures in the client terminal 20 and the biometric authentication server 10 when biometric information is re-enrolled in the biometric authentication system 1b as one example of the second embodiment. Fig. 30 is an illustration to explain false feature points which are generated to make the same true feature points remained.

In the biometric authentication system 1b, the true feature point information having been selected in the initial enrollment process of biometric information is held in, e.g., the storage device 204 of the client terminal 20, when the biometric information is re-enrolled.

Further, in the biometric authentication system 1b, the following processes (1) to (6) are executed to select the false feature points which are useful in canceling the information other than the true feature point information (i.e., the information regarding the selected true feature points) in the previous enrollment process.

(1) The feature point mixing process portion 232 transmits both the true feature point information in the previous enrollment process and the feature point information (coordinates and sector-shaped allowable range) regarding the true feature points in the re-enrollment process to the dummy data generating portion 14 in the biometric authentication server 10.

(2) In addition to generating false feature points at random, the dummy data generating portion 14 generates information regarding those false feature points which are present within circles each having a radius equal to the allowable length of the sector-shaped allowable range and each having a center located at the coordinates of each of ones (i.e., true feature points to be deleted) among the true feature points received from the feature point mixing process portion 232 other than those selected in the previous enrollment process (see Fig. 30). The reason why a circle is used as an area utilizable to delete the true feature points resides in that the false feature points present outside the circle do not take part in deleting the true feature point at the center of the circle.

The dummy data generating portion 14 transmits the generated false feature point information to the feature point mixing process portion 232. The feature point mixing process portion 232 assigns the sector-shaped allowable range to each false feature point in the false feature point information generated by the dummy data generating portion 14.

(3) The feature point mixing process portion 232 assigns the sector-shaped allowable range to each of the true feature points to be deleted, described in above (2), and deletes the false feature point information on condition that the false feature point in the deleted information is not included within the assigned sector-shaped allowable range. In other words, the feature point mixing process portion 232 deletes unnecessary false feature point information.

(4) The feature point mixing process portion 232 selects the false feature point information on condition that the sector-shaped allowable range assigned to the relevant false feature point information, which has not been deleted in above (3), includes the coordinates of the true feature point other than that selected in the previous enrollment process. In other words, the feature point mixing process portion 232 leaves the true feature point selected in the previous enrollment process.

(5) The processing in above (2) to (4) is executed repeatedly until all the true feature points other than those selected in the previous enrollment process are selected in above (4) while the conditions explained in above (3) and (4) are satisfied.

(6) Only the false feature point information is transmitted to the feature point mixing control portion 23.

A process of enrolling the fingerprint information in the biometric authentication system 1b, constructed as described above, according to the second embodiment will be described below.

First, the person to be identified by authentication inputs the fingerprint information (biometric information) through the biometric information input portion 28. The feature point extracting portion 22 obtains the input fingerprint information and executes a true feature point extraction process based on the fingerprint information (enrollment-purpose feature point information generating step).

The feature point extracting portion 22 obtains the true feature point information regarding all the true feature points. The sensor control portion 21 executes pre-processing, such as rough alignment of a fingerprint image and narrowing of fingerprint ridges, on the fingerprint information input through the biometric information input portion 28.

In the feature point mixing control portion 23, the allowable range determining portion 231 executes an allowable range determination process. More specifically, the allowable range determining portion 231 determines, based on the obtained true feature point information, the sector-shaped allowable range. The determined sector-shaped allowable range is transmitted to the dummy data generating portion 14 in the biometric authentication server 10 via the communication control portions 25 and 13 and the communication line 301.

In the biometric authentication server 10, the dummy data generating portion 14 executes a false feature point generation process of generating dummy data (i.e., a plurality of false feature points) (dummy data generating step). The generated dummy data are transmitted to the feature point mixing control portion 23 in the client terminal 20 via the communication control portions 25 and 13 and the communication line 301.

The feature point mixing process portion 232 executes a feature point mixing process. More specifically, the feature point mixing process portion 232 mixes (adds) false feature points to all the true feature points (see Fig. 9). The feature point mixing control portion 23 sets (assigns) the sector-shaped allowable range for each of the true feature points on the virtual coordinate plane (range information setting step), and selects the false feature points included in the assigned allowable ranges (see Fig. 10; enrollment-purpose first selection step). Further, the feature point mixing process portion 232 holds feature point information regarding the non-selected false feature points (i.e., non-selected false feature point information).

Then, the feature point mixing process portion 232 assigns the sector-shaped allowable range for each of the selected false feature points (see Fig. 12; range information setting step), and deletes the true feature points included in the assigned allowable ranges (see Fig. 13; enrollment-purpose second selection step). Further, the feature point mixing process portion 232 deletes some of the selected false feature points to make an adjustment such that the number of selected true feature points and the number of selected true feature points are substantially equal to each other (see Fig. 14).

The feature point mixing process portion 232 saves the information regarding all the false feature points and the sector-shaped allowable range in the storage device 204 of the client terminal 20 (false feature point group information storing step).

Further, the feature point mixing process portion 232 changes the coordinates of the false feature point so as to be kept within the sector-shaped allowable range of the true feature point having not been deleted, and within the allowances for change, which are enrolled as the default values for the system (see Figs. 26 to 28).

In addition, the feature point mixing process portion 232 changes, for the false feature point of which coordinates have been changed, the direction so as to be kept within such a range as not changing the true feature point included in the relevant range, and within the allowable range enrolled as the allowable value for the system (see Figs. 26 to 28).

Then, the feature point mixing process portion 232 transmits the information regarding the selected true feature points and the information regarding the selected false feature points after the change of the range information to the biometric authentication server 10 along with the user ID for identification of the enrolled user. In the biometric authentication server 10, a biometric information saving process is executed to save, as the enrolled template, the set of selected true feature points and the set of selected false feature points in the biometric data storage 16 in correspondence to the ID information (e.g., the user ID) for identification of the enrolled user (enrollment-purpose mixed feature point information storing step).

The authentication process using the fingerprint information of the person to be identified by authentication in the biometric authentication system 1b according to the second embodiment will be described below.

First, the person to be identified by authentication inputs the fingerprint information (biometric information) through the biometric information input portion 28 (authentication-purpose biometric information input step). The feature point extracting portion 22 obtains the input fingerprint information (authentication-purpose biometric information obtaining step) and executes a true feature point extraction process based on the input fingerprint information (authentication-purpose feature point information generating step). The feature point extracting portion 22 obtains the true feature point information regarding all the true feature points.

The sensor control portion 21 executes pre-processing, such as rough alignment of a fingerprint image and narrowing of fingerprint ridges, on the fingerprint information input through the biometric information input portion 28.

The feature point mixing control portion 23 obtains plural sets of false feature points stored in the dummy data storage 27 and matches a plurality of true feature points extracted by the feature point extracting portion 22 with the feature point information and the range information regarding each set of false feature points.

The feature point mixing process portion 232 confirms, for each set of false feature points, whether true feature points are present within the sector-shaped allowable ranges assigned to the false feature points making up the relevant false feature point set. If, for all sets of false feature points, there are no true feature points within the sector-shaped allowable ranges assigned to the false feature points making up the false feature point set, the feature point mixing process portion 232 notifies the failure of the match to the enrollment/matching control portion 24. The enrollment/matching control portion 24 notifies the failure of the match to the authentication result notifying portion 29, and the authentication result notifying portion 29 notifies the failure of the authentication to the person to be identified by authentication, etc. (notifying step).

If there are true feature points within the assigned sector-shaped allowable ranges, the feature point mixing process portion 232 examines the number of true feature points included in the sector-shaped allowable ranges of the false feature points making up each false feature point set, and selects the false feature point set providing the sector-shaped allowable ranges within which a maximum number of true feature points are included (authentication-purpose second selection step).

Then, the feature point mixing process portion 232 sets (assigns) the sector-shaped allowable range for each of the true feature points on the virtual coordinate plane (second range information setting step), and deletes the false feature points not included in the assigned allowable ranges.

Further, the feature point mixing process portion 232 deletes the information regarding the false feature points that have not been used in the match. The information regarding those false feature points corresponds to the above-mentioned feature point information regarding the non-selected false feature points (i.e., the non-selected false feature point information), which has been stored by the feature point mixing process portion 232 in the enrollment process.

Then, the feature point mixing process portion 232 adds information regarding the remaining (selected) false feature points to the true feature point information. Further, the feature point mixing process portion 232 sets (assigns) the sector-shaped allowable range for each of the false feature points on the virtual coordinate plane, and deletes the true feature points included in the assigned allowable ranges (authentication-purpose first selection step).

Then, the feature point mixing process portion 232 generates authentication-purpose feature point information by combining the feature point information regarding the selected false feature points remaining on the virtual coordinate plane and the feature point information regarding the true feature points (authentication-purpose mixed feature point information generating step). The authentication-purpose feature point information is transmitted to the biometric authentication server 10 via the communication control portions 25 and 13 and the communication line 301, and is matched by the biometric data matching process portion 15 with the enrolled template stored in the biometric data storage 16 as in the above-described biometric authentication system 1a (matching step).

In the match, as described above, the selection of the false feature points is first executed. Therefore, even when the extra false feature points are included in the client terminal (i.e., the enrolled template), the extra false feature points are deleted in the stage where the false feature points are selected. The information regarding the false feature points, which remain without being deleted, coincides with the false feature point information included in the feature point information that is stored in the biometric authentication server 10. Since deletion of the true feature point information is executed based on the information regarding the remaining false feature points, no influences are imposed on the deletion of the true feature point information.

A process of re-enrolling the fingerprint information of the person to be identified by authentication in the biometric authentication system 1b according to the second embodiment will be described below.

When fingerprint information is re-enrolled, the set of false feature points is first selected by executing similar processing to that in steps B10 to B60 of Fig. 22 for the re-enrollment process in the above-described biometric authentication system 1 a.

Then, the feature point mixing process portion 232 deletes the data in the feature point information regarding the selected false feature points other than the range information.

Further, the feature point mixing process portion 232 obtains not only the coordinates of the true feature points extracted in step B20, but also the false feature point information transmitted from the biometric authentication server 10. Then, the feature point mixing process portion 232 assigns the sector-shaped allowable range for each of the true feature points on the virtual coordinate plane and selects the false feature points included in the assigned allowable ranges (i.e., the false feature points to be selected).

The feature point mixing process portion 232 holds the feature point information regarding the false feature points which have not been selected. Then, the feature point mixing process portion 232 assigns the sector-shaped allowable range for each of the selected false feature points (see Fig. 12) and deletes the true feature points included in the assigned allowable ranges (see Fig. 13). Also, the feature point mixing process portion 232 deletes some of the selected false feature points to make an adjustment such that the number of selected true feature points and the number of selected true feature points are substantially equal to each other (see Fig. 14).

The feature point mixing process portion 232 saves the information regarding all the false feature points and the sector-shaped allowable range in the storage device 204 of the client terminal 20.

Further, the feature point mixing process portion 232 changes the coordinates of the false feature point so as to be kept within the sector-shaped allowable range of the true feature point having not been deleted, and within the allowances for change, which are enrolled as the default values for the system (see Figs. 26 to 28).

In addition, the feature point mixing process portion 232 changes, for the false feature point of which coordinates have been changed, the direction so as to be kept within such a range as not changing the true feature point included in the relevant range, and within the allowable range enrolled as the allowable value for the system (see Figs. 26 to 28).

Then, the feature point mixing process portion 232 transmits the information regarding the selected true feature points and the information regarding the false feature points after the change of the range information to the biometric authentication server 10 along with the user ID for identification of the enrolled user. In the biometric authentication server 10, a biometric information saving process is executed to save, as the enrolled template, the set of selected true feature points and the set of selected false feature points in the biometric data storage 16 in correspondence to the ID information (e.g., the user ID) for identification of the enrolled user.

Thus, the biometric authentication system 1b according to the second embodiment can provide similar operating advantages to those obtained with the above-described biometric authentication system 1a. Further, should the enrolled template is leaked repeatedly when the biometric information of the person to be identified by authentication is re-enrolled several times, only part (50%) of the true feature point information is leaked. Accordingly, the true feature point information regarding the person to be identified by authentication can be prevented from being leaked in its entirety. In other words, even if the past enrolled templates are all collected by a third party, it is difficult to completely restore the true feature point information. As a result, cancelable biometric information authentication with higher security can be realized.

In addition, with the biometric authentication system 1 b according to the second embodiment, since the false feature points not included in the enrolled template are present in addition to the set of selected false feature points, the enrolled template is difficult to infer from the those combined false feature points. Hence, security can be further increased.

(C) Explanation of Modifications

The techniques disclosed herein are not limited to the above-described embodiments, and they can be carried out in various modified forms within the scope without departing from the purports of the embodiments.

While the false feature points are generated at random by the dummy data generating portion 14 in the above-described embodiments, a manner of generating the false feature points is not limited to the disclosed one. For example, the coordinates of the false feature points may be determined based on the biometric information input through the biometric information input portion 23.

In that modification, if the distance to the nearest feature point varies to such an extent as being not able to determine the allowable length based on a level of appearance frequency of the distance to the nearest feature point when the sector-shaped allowable range is determined, the false feature point information adapted for the input true feature point information is generated. More specifically, the following operations (1) to (6) are executed after determining the allowable length from an average of the distance between the true feature point and the nearest feature point.

(1) The feature point mixing control portion 23 transmits the coordinates of the true feature points extracted by the feature point extracting portion 22 to the dummy data generating portion 14. Also, the feature point mixing control portion 23 transmits the true feature point information the sector-shaped allowable range, the latter being determined based on the average of the distance to the nearest feature point, to the dummy data generating portion 14.

(2) The dummy data generating portion 14 selects 50% of the received true feature point information at random.

(3) In addition to generating the false feature point information at random, the dummy data generating portion 14 generates information regarding those false feature points which are present within circles each having a radius equal to the allowable length of the sector-shaped allowable range and each having a center located at the coordinates of each of the true feature points that have been selected in above (2).

(4) The feature point mixing control portion 23 assigns the sector-shaped allowable range to the false feature point information generated in above (3), and confirms the false feature point information on condition that the true feature point information selected in above (2) is included within the assigned sector-shaped allowable range. In other words, false feature points adapted for deleting 50% of the true feature points are generated.

(5) The dummy data generating portion 14 executes above (3) repeatedly until all the true feature points selected in above (2) are included within the assigned sector-shaped allowable ranges in above (3) while the condition in above (4) is satisfied.

(6) The dummy data generating portion 14 transmits only the false feature point information to the feature point mixing control portion 23.

By generating the false feature points near the true feature points as described above, it is possible to generate an optimum set of false feature points and to reduce a rejection rate of the proper enrolled user, for example, even when the distance between the true feature points varies to a large extent.

While, in the above-described embodiments, the set of false feature points is managed in the client terminal 20, a manner of managing the set of false feature points is not limited to the disclosed one. The set of false feature points may be managed in some other suitable device.

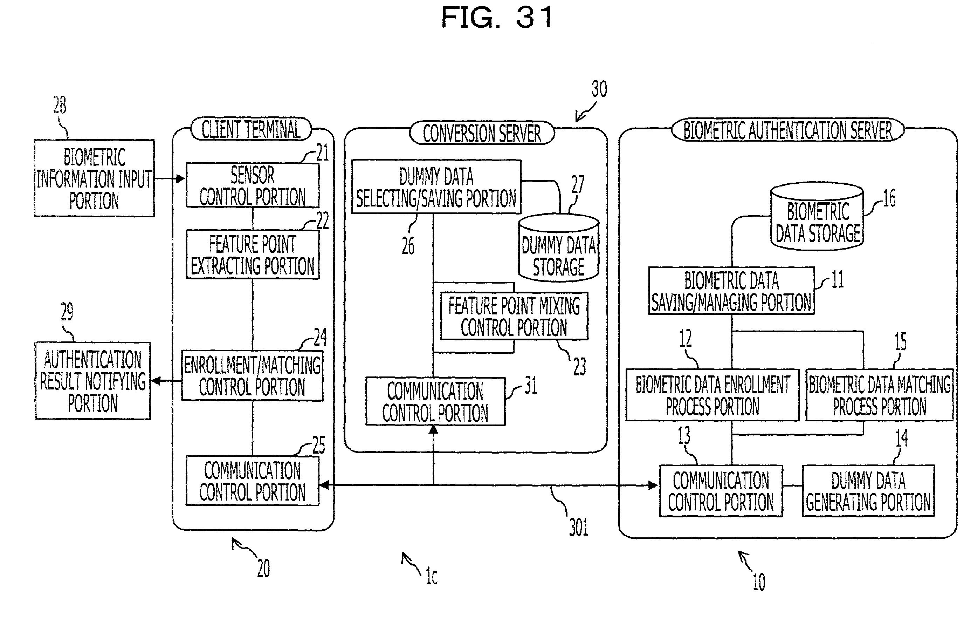

Fig. 31 is a block diagram illustrating the functional configuration of a biometric authentication system 1 c as one example of modifications. The biometric authentication system 1c illustrated in Fig. 31 includes, on the communication line 301, a conversion server 30 which can be accessed from each of the client terminal 20 and the biometric authentication server 10. The conversion server 30 has a similar hardware configuration to that of the biometric authentication server 10, and hence the hardware configuration of the conversion server 30 is not described here.

In the biometric authentication system 1c illustrated in Fig. 31, the conversion server 30 includes the dummy data selecting/saving portion 26, the dummy data storage 27, and the feature point mixing control portion 23, which are included in the client terminal 20 in the first and second embodiments. The conversion server 30 further includes a communication control portion 31 to transfer data to and from the client terminal 20 and the biometric authentication server 10 via the communication line 301 under control of the communication control portion 31.

While Fig. 31 illustrates only one client terminal 20 for simplification of the drawing, it is assumed that a plurality of client terminals 20 are connected to the communication line 301 in a manner capable of communicating with each of the conversion server 30 and the biometric authentication server 10.

Be it noted that the same reference characters in Fig. 31 as the already-mentioned ones denote exactly or substantially the same components and hence detailed descriptions of those components are omitted.

In the biometric authentication system 1c thus constituted, processing from input of the biometric information through the biometric information input portion 28 to extraction of the feature points by the feature point extracting portion 22 is substantially the same as the processing executed in the above-described biometric authentication systems 1 a and 1 b according to the first and second embodiments.

The enrollment/matching control portion 24 transmits the extracted feature points to the feature point mixing control portion 23 in the conversion server 30 via the communication control portion 25 and the communication line 301. The feature point mixing control portion 23 receives the false feature point information from the dummy data generating portion 14 in the biometric authentication server 10 via the communication control portion 31.

The feature point mixing control portion 23 saves the set of false feature points in the dummy data storage 27 through the dummy data selecting/saving portion 26. In addition, the feature point mixing control portion 23 enrolls, as the enrolled template, combined information regarding the set of false feature points and the set of true feature points in the biometric data storage 16 of the biometric authentication server 10.

A process of generating the set of false feature points and the set of true feature points in the feature point mixing control portion 23 and a process of enrolling the enrolled template in the biometric authentication server 10 are similar to the processes executed in the above-described biometric authentication systems 1 a and 1b according to the first and second embodiments. Hence, descriptions of those processes are omitted.

In the authentication process in the biometric authentication system 1c, similarly to the operations in the enrollment process, the feature point mixing control portion 23 receives the input biometric information from the client terminal 20 through the conversion server 30 and generates the authentication-purpose mixed feature point information that is a combination of the set of false feature points and the set of true feature points. The authentication-purpose mixed feature point information is transmitted to the biometric authentication server 10 via the communication control portions 31 and 13, and a process of making a match with the enrolled template is executed in the biometric authentication server 10. The matching process is similar to that in the above-described biometric authentication systems 1a and 1b according to the first and second embodiments. Hence, a description of the matching process is omitted.

With the biometric authentication system 1c according to this modification, the person to be identified by authentication is not specifically bound to the particular client terminal 20 and can perform the biometric authentication by accessing the conversion server 30 and the biometric authentication server 10 from any of the plurality of client terminals 20. As a result, higher usability can be ensured to the user.

While, in the example illustrated in Fig. 31, the set of false feature points is managed in the conversion server 30, a manner of managing the set of false feature points is not limited to the disclosed one. For example, the dummy data selecting/saving portion 26, the dummy data storage 27, and the feature point mixing control portion 23 may be included in the biometric authentication server 10.

Further, while, in the above-described embodiments and modification, the set of false feature points is managed in the client terminal 20, the conversion server 30, and the biometric authentication server 10, the manner of managing the set of false feature points is not limited to the disclosed ones. For example, the set of false feature points may be managed in some other device managed by the person to be identified by authentication.

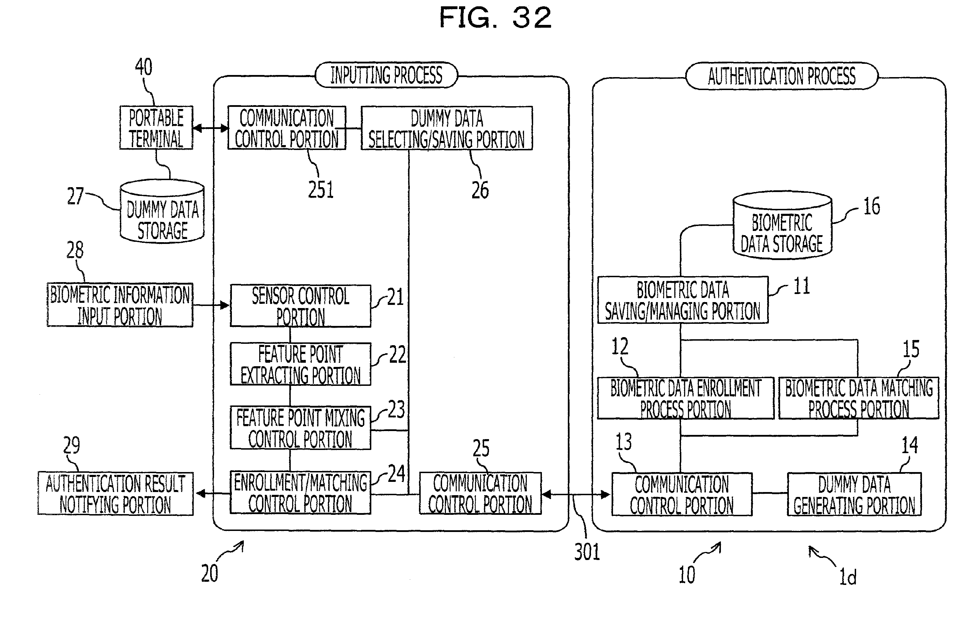

Fig. 32 is a block diagram illustrating the functional configuration of a biometric authentication system 1 d as another example of modifications.

The biometric authentication system 1d illustrated in Fig. 32 is constituted by adding a portable terminal 40 to the biometric authentication system 1a according to the first embodiment. The biometric authentication system 1d is a client/server-type biometric authentication system in which the extraction of the feature point information of the person to be identified by authentication is executed in the client terminal 20, and the enrollment and the match of the biometric information are executed in the biometric authentication server 10.

In the biometric authentication system 1d, the client terminal 20 further includes a communication control portion 251, and the portable terminal 40 is connected to the client terminal 20 in a manner permitting communication therebetween via the communication control portion 251. Further, in the biometric authentication system 1 d, the portable terminal 40 includes the dummy data storage 27 instead of the above-described arrangement in which the dummy data storage 27 is provided in the client terminal 20. Other components are constituted similarly to those in the biometric authentication system 1 a according to the first embodiment.

While Fig. 32 illustrates only one client terminal 20 for simplification of the drawing, it is assumed that a plurality of client terminals 20 are connected to the communication line 301 in a manner capable of communicating with each of the conversion server 30 and the biometric authentication server 10.

Stated another way, the biometric authentication system 1d is constituted such that the biometric authentication server 10 can be accessed from any of the plurality of client terminals 20. Accordingly, the person to be identified by authentication is not specifically bound to the particular client terminal 20 and can perform the authentication using the biometric information from any of the plurality of client terminals 20.

The portable terminal 40 is a device portable by, e.g., the person to be identified by authentication, and it includes at least a communication control portion (not shown) for connection to the client terminal 20 in a manner permitting communication therebetween and a storage device (not shown). The person to be identified by authentication performs the enrollment and the authentication of the biometric information in a state that the portable terminal 40 is connected to the client terminal 20 in a manner permitting communication therebetween.

In the biometric authentication system 1d thus constituted, the set of false feature points is stored in the portable device such as the portable terminal 40. Therefore, the dummy data generating portion 14 obtains the set of false feature points from the dummy data storage 27 via the communication control portions 13, 25 and 251 and the communication line 301, and enrolls the obtained set of false feature points in the dummy data storage 27 of the portable terminal 40.

With the biometric authentication system 1 d according to this modification, the person to be identified by authentication is not specifically bound to the particular client terminal 20 and can perform the biometric authentication by accessing the conversion server 30 or the biometric authentication server 10 from any of the plurality of client terminals 20. As a result, higher usability can be ensured.

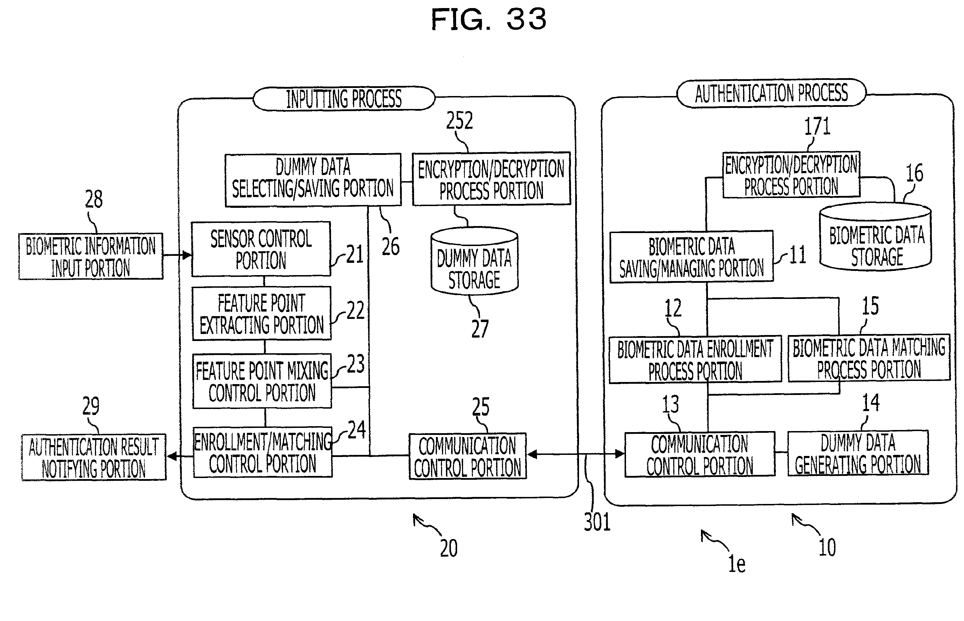

Fig. 33 is a block diagram illustrating the functional configuration of a biometric authentication system 1e as still another example of modifications. The biometric authentication system 1e illustrated in Fig. 33 includes an encryption/decryption process portion 252 in the client terminal 20 and an encryption/decryption process portion 171 in the biometric authentication server 10, respectively, in addition to the above-described biometric authentication system 1 a according to the first embodiment.

The encryption/decryption process portions 252 and 171 are to encrypt and decrypt data. The encryption/decryption process portion 252 encrypts at least part of the false feature point information and the range information (allowable length and allowable angle) for the set of false feature points stored in the dummy data storage 27. The encryption/decryption process portion 252 can also decrypt data that has been encrypted by the encryption/decryption process portion 171.

In the biometric authentication server 10, the encryption/decryption process portion 171 encrypts at least part of the set of true feature points, the set of false feature points, the true feature point information, the false feature point information, and the range information (allowable length and allowable angle), which are stored in the biometric data storage 16. The encryption/decryption process portion 171 can also decrypt data that has been encrypted by the encryption/decryption process portion 252.

In the biometric authentication system 1 e, various data stored in the dummy data storage 27 and the biometric data storage 16 are encrypted by the encryption/decryption process portions 252 and 171. When using encrypted data, the encrypted data is decrypted by the encryption/decryption process portion 252 or 171 before use. Therefore, even if data (such as the set of false feature points, the set of true feature points, and the range information) related to the biometric authentication is leaked, it is possible to prevent an attack that may be tried by manipulating the leaked data. As a result, reliability of the system can be enhanced.

Practical methods for the encryption and the decryption executed by the encryption/decryption process portions 252 and 171 can be realized with various known methods, and hence detailed descriptions thereof are omitted.

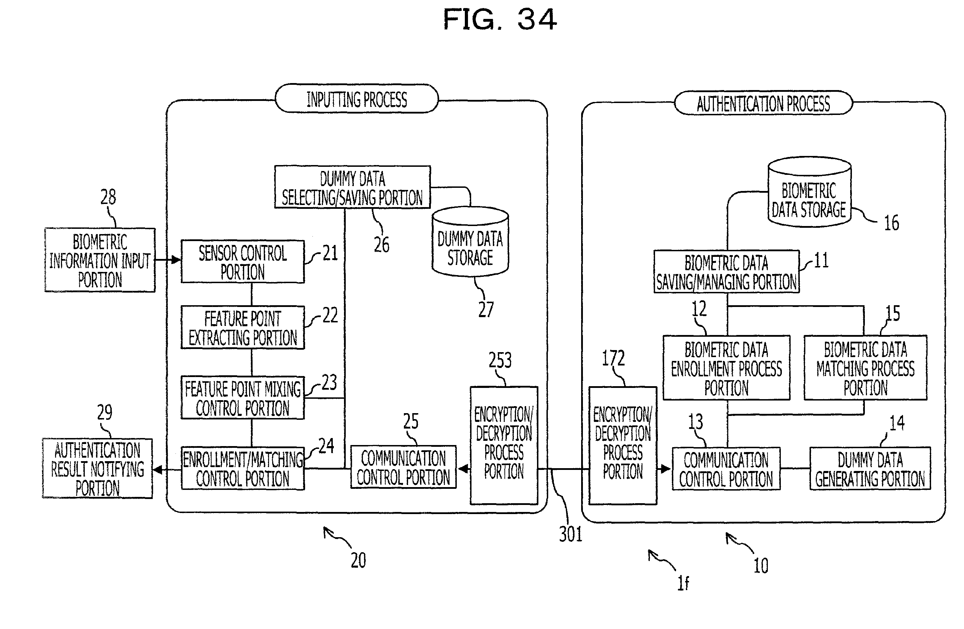

Fig. 34 is a block diagram illustrating the functional configuration of a biometric authentication system 1f as still another example of modifications. The biometric authentication system 1f illustrated in Fig. 34 includes an encryption/decryption process portion 253 in the client terminal 20 and an encryption/decryption process portion 172 in the biometric authentication server 10, respectively, in addition to the above-described biometric authentication system 1a according to the first embodiment.

The encryption/decryption process portions 253 and 172 are to encrypt and decrypt data. The encryption/decryption process portion 253 encrypts data (such as the set of true feature points, the set of false feature points, the true feature point information, the false feature point information, and the range information), which are output from the client terminal 20 via the communication control portion 25. The encryption/decryption process portion 253 also decrypts data input from the outside of the client terminal 20 via the communication control portion 25.

Similarly, the encryption/decryption process portion 172 encrypts data (such as the set of true feature points, the set of false feature points, the true feature point information, the false feature point information, and the range information), which are output from the biometric authentication server 10 via the communication control portion 13. The encryption/decryption process portion 172 also decrypts data input from the outside of the biometric authentication server 10 via the communication control portion 13.

Practical methods for the encryption and the decryption executed by the encryption/decryption process portions 253 and 172 can be realized with various known methods, and hence detailed descriptions thereof are omitted.

In the biometric authentication system 1f, the encryption/decryption process portions 253 and 172 encrypt data (such as the set of false feature points, the set of true feature points, and the range information), which are transferred between the client terminal 20 and the biometric authentication server 10. It is therefore possible to prevent an attack that may be tried as an authentication request by impersonation, and to enhance reliability of the system.

The biometric authentication system 1f is constituted as a client/server-type biometric authentication system in which temporary biometric data corresponding to the enrolled template flows over the communication line 301 between the client terminal 20 and the biometric authentication server 10. In such a system, the temporary biometric data is not changed whenever communicated. Hence, there is a risk that, if the data communicated between the client terminal 20 and the biometric authentication server 10 is leaked, the leaked data may be fraudulently used in the same-type system.

Since the encryption/decryption process portions 253 and 172 encrypt the communication data, the biometric authentication system 1f can prevent the communication data from being fraudulently used.

In the biometric authentication systems 1a to 1f according to the above-described embodiments and modifications, the following problem arises when the enrollment process is executed for a new person to be identified by authentication. When a set of false feature points newly enrolled is analogous to the set of false feature points already stored in the dummy data storage 27, the rejection rate of the proper enrolled user is increased in the authentication process.

In order to avoid that problem, it is effective in the enrollment process to confirm whether the set of false feature points which is newly enrolled for the person to be identified by authentication is not analogous to the set of false feature points already stored in the dummy data storage 27.

Stated another way, after generating the set of false feature points, the feature point mixing control portion (analogy confirming portion) 23 transmits the generated set of false feature points to the dummy data selecting/saving portion 26 and confirms whether the set of false feature points analogous to the transmitted one is not present in the dummy data storage 27.

More specifically, a matching process is executed on the set of false feature points, which is newly enrolled for the person to be identified by authentication, with respect to the sets of false feature points already enrolled in the dummy data storage 27. If the match has failed, this indicates that the set of false feature points analogous to the newly generated set of false feature points is not present in the dummy data storage 27. Therefore, the enrollment process is continued to execute subsequent processes such as generating the enrollment-purpose mixed feature point information. On the other hand, if the match has succeeded, the feature point mixing control portion 23 generates a new set of false feature points again and repeats similar processing to that described above. As a result, the rejection rate of the proper enrolled user can be reduced in the authentication process.

At the time of generating the set of false feature points, the feature point mixing control portion 23 may generate a dummy set of false feature points so as to reduce a possibility of the set of false feature points being leaked. For example, when only one user employs the client terminal 20 adapted for inputting the biometric information, reliability of the system can be effectively enhanced by preventing the set of false feature points, which is employed for the user, from being found out by a third party.

More specifically, after generating the set of false feature points, the feature point mixing control portion 23 generates another set of false feature points (i.e., a dummy set of false feature points) in the same number as for the set of false feature points having been generated. The dummy set of false feature points is preferably generated in plural.

The feature point mixing control portion 23 transmits all the sets of false feature points, including the dummy set(s) of false feature points, to the dummy data selecting/saving portion 26 to be stored in the dummy data storage 27. Also, the feature point mixing control portion 23 transmits the enrolled template for the relevant user, which is in combination of the set of false feature points and the set of true feature points, to the biometric data saving/managing portion 11 in the biometric authentication server 10, whereby the enrolled template is stored in the biometric data storage 15.

Thus, even if a third party accesses the dummy data storage 27, it is harder to specify the set of false feature points, which is employed for the user. Accordingly, a security level can be increased.

To avoid an increase in the rejection rate of the proper enrolled user due to fluctuations in input of the biometric information in the matching process, the feature point mixing control portion (range information changing portion) 23 may execute the match while the sector-shaped allowable range is enlarged such that the sector-shaped allowable range assigned in the enrollment processing is included at the center of the sector-shaped allowable range having been enlarged.

When the true feature points and the false feature points selected in the first and second selection steps described above are present near the boundaries of the sector-shaped allowable ranges, the fluctuations in input of the biometric information in the matching process cannot be often absorbed by those sector-shaped allowable ranges. In such a case, the feature point information can be easily selected by executing the process of selecting the true feature points and the false feature points while enlarging the sector-shaped allowable ranges.

More specifically, the biometric data matching process portion 15 previously holds a threshold within which identity of the same user can be determined even with some discrepancy in the coordinates of the feature points when the matching process is executed in authentication of the biometric information. The feature point mixing control portion 23 previously obtains the threshold via the communication control portions 25 and 13 and the communication line 301.

The feature point mixing control portion 23 calculates the length and the angle based on the obtained threshold and enlarges the sector-shaped allowable range such that the sector-shaped allowable range assigned in the enrollment process is included at the center of the sector-shaped allowable range having been enlarged. Herein, the latter sector-shaped allowable range is called the enlarged allowable range. The feature point mixing control portion 23 executes the authentication process by using the enlarged allowable range instead of the sector-shaped allowable range set in the enrollment process. In other words, when the authentication process is executed, the selection of the true feature points and the selection of the false feature points are performed by using the enlarged allowable range.

Therefore, the sector-shaped allowable range used in the biometric authentication is enlarged and the feature points located near the boundaries of the sector-shaped allowable ranges are less subjected to the influence of fluctuations in input of the biometric information. As a result, an increase in the rejection rate of the proper enrolled user can be prevented. Because the true feature points are provided by using part of the feature points extracted from the input biometric information as they are, an acceptance rate of some other person is not increased.

While, in the above-described embodiments and modifications, the client terminal 20 primarily executes the inputting process and the biometric authentication server 10 primarily executes the authentication process, allocation of the processes is not limited to the disclosed one. For example, the function of part of each process may be executed in a way divided and distributed to a plurality of information processing apparatuses.

While, in the above-described embodiments and modifications, the fingerprint is used as the biometric information, the biometric information used is not limited to the fingerprint. For example, an iris, a vascular pattern, a retina, a face, a voiceprint, a signature or the like may also be used as the biometric information.

When an iris, for example, is used as the biometric information, the authentication can be realized by using the coordinates and the direction of each iris pattern. Similarly, when a vascular pattern or a retina is used, the authentication can be realized by using the coordinates and the direction of each branch point therein. When a face is used, the authentication can be realized by using the coordinates of each part, such as an eye, a nose and a mouth, and the direction from one to another part. When a signature is used, the authentication can be realized by using the coordinates and the direction of each of start and end points of a holograph written with a pen.

In the biometric authentication server 10, the client terminal 20, and the conversion server 30, the CPUs 101 and 201 execute the biometric information processing program and the biometric authentication program. With the execution of those programs, the CPUs 101 and 201 function as an enrollment-purpose feature point information generating portion, the dummy data generating portion, the range information setting portion, the enrollment-purpose first selection portion, the enrollment-purpose second selection portion, an enrollment-purpose mixed feature point information generating portion, an enrollment-purpose mixed feature point information storing and control portion, a false feature point group information storing and control portion, an authentication-purpose feature point information generating portion, the authentication-purpose first selection portion, and an authentication-purpose mixed feature point information generating portion, as required.

The programs (i.e., the biometric information processing program and the biometric authentication program) for implementing the functions of those portions are provided in the form recorded on a computer-readable recording medium, such as a flexible disk, CD (e.g., CD-ROM, CD-R and CD-RW), DVD (DVD-ROM, DVD-RAM, DVD-R, DVD+R, DVD-RW, DVD+RW, HD and DVD), a Blue-ray disk, a magnetic disk, an optical disk, and a magneto-optical disk. A computer reads the programs from the recording medium and transfers the programs to an internal storage device or an external storage device to be stored therein for practical use. Alternatively, the programs may be recorded in a memory unit (recording medium), such as a magnetic disk, an optical disk, or a magneto-optical disk, and may be provided to a computer from the memory unit via a communication line.

When implementing the respective functions of the enrollment-purpose feature point information generating portion, the dummy data generating portion, the range information setting portion, the enrollment-purpose first selection portion, the enrollment-purpose second selection portion, the enrollment-purpose mixed feature point information generating portion, the enrollment-purpose mixed feature point information storing and control portion, the false feature point group information storing and control portion, the authentication-purpose feature point information generating portion, the authentication-purpose first selection portion, and the authentication-purpose mixed feature point information generating portion, the programs stored in internal memories (e.g., the RAMs 102 and 202 or the ROMs 103 and 203 in the embodiment) are executed by a microprocessor in a computer (e.g., the CPU 101 or 201 in the embodiment). On that occasion, the computer may read and execute the programs recorded on the recording medium.

In the disclosure of the embodiments, the term "computer" means the concept including hardware and an operating system, and it implies hardware operating under control of the operating system. Also, when the hardware is operated by an application program alone without needing the operating system, the hardware corresponds in itself to the computer. The hardware includes at least a microprocessor, such as a CPU, and a means for reading computer programs recorded on a recording medium. In the embodiments, each of the client terminal 20, the biometric authentication server 10, and the conversion server 30 has the function of the computer.

The techniques disclosed herein can be practiced in variously modified forms within the scope without departing from the gist of the disclosure without being limited to the above-described embodiments and modifications.

For example, while the dummy data generating portion 14 is included in the biometric authentication server 10 in the above-described embodiments and modifications, the arrangement is not limited to the disclosed one. The dummy data generating portion 14 may be included in, e.g., the client terminal 20. In such a case, since the dummy data generating portion 14 is included in the client terminal 20 for primarily executing the inputting process, the false feature point information generated by the dummy data generating portion 14 is not transmitted over the communication line 301. As a result, communication traffic between the biometric authentication server 10 and the client terminal 20 can be reduced. Further, the components of the above-described embodiments and modifications may be optionally combined with each other in practical use.

Those skilled in the art can practice and produce the embodiments based on the foregoing disclosure.

The biometric authentication system, the biometric authentication method, the biometric authentication apparatus, the biometric information processing apparatus, the biometric authentication program, and the biometric information processing program, which have been disclosed hereinabove, can realize cancelable biometric information authentication with high security.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/ software implementing the embodiments may be recorded on computer-readable media comprising computer-readable recording media. The program/software implementing the embodiments may also be transmitted over transmission communication media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. An example of communication media includes a carrier-wave signal. The media described above may be non-transitory media.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.

**Claims**

1. A biometric authentication system, comprising:

a portion generating enrollment-purpose mixed feature point information by extracting enrollment-purpose true feature point information from input enrollment-purpose biometric information, and by combining part of the enrollment-purpose true feature point information, which is selected based on dummy data generated at random, and false feature point information generated based on the dummy data, and
a portion executing authentication by extracting authentication-purpose feature point information from input authentication-purpose biometric information, generating authentication-purpose mixed feature point information that includes part of the authentication-purpose feature point information, which is selected based on the false feature point information and the false feature point information, and by matching the authentication-purpose mixed feature point information with the enrollment-purpose mixed feature point information.

2. The biometric authentication system according to claim 1, further comprising:

an enrollment-purpose feature point information generating portion generating, as the enrollment-purpose true feature point information, plural data of feature point information based on the enrollment-purpose biometric information obtained by an enrollment-purpose biometric information obtaining portion;
a dummy data generating portion generating, as the dummy data, plural data of false feature point information at random;
a range information setting portion setting range information with respect to the feature point information;
an enrollment-purpose first selection portion selecting, as false feature point group information, two or more among the plural data of false feature point information based on the range information set with respect to the enrollment-purpose true feature point information;
an enrollment-purpose second selection portion selecting two or more among the plural data of enrollment-purpose true feature point information based on the range information set with respect to the false feature point information selected by the enrollment-purpose first selection portion;
an enrollment-purpose mixed feature point information generating portion generating the enrollment-purpose mixed feature point information based on both the false feature point group information selected by the enrollment-purpose first selection portion and the two or more data of enrollment-purpose true feature point information selected by the enrollment-purpose second selection portion;
an enrollment-purpose mixed feature point information storage storing the enrollment-purpose mixed feature point information generated by the enrollment-purpose mixed feature point information generating portion;
a false feature point group information storage storing the false feature point group information selected by the enrollment-purpose first selection portion;
an authentication-purpose biometric information obtaining portion obtaining the authentication-purpose biometric information;
an authentication-purpose feature point information generating portion generating, as plural data of authentication-purpose true feature point information, plural data of feature point information based on the authentication-purpose biometric information obtained by the authentication-purpose biometric information obtaining portion;
an authentication-purpose first selection portion selecting two or more among the plural data of authentication-purpose true feature point information based on the range information set with respect to the two or more data of false feature point information stored in the false feature point group information storage;
an authentication-purpose mixed feature point information generating portion generating the authentication-purpose mixed feature point information based on both the two or more data of authentication-purpose true feature point information selected by the authentication-purpose first selection portion and the two or more data of false feature point information stored in the false feature point group information storage; and

a matching portion matching the authentication-purpose mixed feature point information generated by the authentication-purpose feature point information generating portion with the enrollment-purpose mixed feature point information stored in the enrollment-purpose mixed feature point information storage.

**3.** The biometric authentication system according to claim 2, wherein
the enrollment-purpose first selection portion selects the false feature point group information based on a state that the false feature point information generated by the dummy data generating portion is included in the range information set with respect to the enrollment-purpose true feature point information generated by the enrollment-purpose feature point information generating portion.

**4.** The biometric authentication system according to claim 2, wherein
the enrollment-purpose second selection portion selects the enrollment-purpose true feature point information based on a state that the true feature point information is included in the range information set with respect to the false feature point information selected by the enrollment-purpose first selection portion.

**5.** The biometric authentication system according to claim 2, 3 or 4,
wherein
the enrollment-purpose mixed feature point information generating portion employs, in generating the enrollment-purpose mixed feature point information, those ones among the plural data of enrollment-purpose false feature point information, which are not selected as the false feature point group information when the two or more data of false feature point group information are selected by the enrollment-purpose first selection portion.

**6.** The biometric authentication system according to claim 2, 3 or 4, further comprising:

an analogy confirming portion confirming whether the false feature point group information selected by the enrollment-purpose first selection portion is analogous to the false feature point group information already stored in the false feature point group information storage,
wherein the enrollment-purpose mixed feature point information generating portion generates the enrollment-purpose mixed feature point information by using the false feature point group information that has been confirmed by the analogy confirming portion as being not analogous to the false feature point group information already stored in the false feature point group information storage.

**7.** The biometric authentication system according to any one of claims 2 to 6, further comprising:

a feature point editing portion, when the two or more data of enrollment-purpose true feature point information are selected by the enrollment-purpose second selection portion, performing edits on condition that the false feature point information included in the range information set with respect to the selected enrollment-purpose true feature point information does not depart from the range information set with respect to the selected enrollment-purpose true feature point information, and that not-selected one among the plural data of enrollment-purpose true feature point information, which has not been selected as the two or more data of the enrollment-purpose true feature point information, is included in the range information set with respect to the enrollment-purpose false feature point information.

**8.** The biometric authentication system according to claim 2, or any one of claims 5 to 7 when read as appended to claim 2, wherein
in selecting the false feature point information when the enrollment-purpose mixed feature point information is regenerated, the enrollment-purpose first selection portion selects, as the false feature point group information, the false feature point information on condition that the range information set with respect to the false feature point information includes the enrollment-purpose true feature point information which has been used to generate the previous enrollment-purpose mixed feature point information, but does not include the enrollment-purpose true feature point information which has not been used to generate the previous enrollment-purpose mixed feature point information.

**9.** The biometric authentication system according to any one of claims 2 to 8, wherein
the false feature point group information storage stores plural sets of false feature point group information,

the biometric authentication system further comprises an authentication-purpose second selection portion for selecting one among the plural sets of false feature point group information stored in the false feature point group information storage, and

the authentication-purpose mixed feature point information generating portion generates the authentication-purpose mixed feature point information based on both the false feature point group information selected by the authentication-purpose second selection portion and the two or more data of the authentication-purpose true feature point information selected by the authentication-purpose first selection portion.

**10.** A biometric authentication method, comprising:

generating enrollment-purpose mixed feature point information by extracting enrollment-purpose true feature point information from input enrollment-purpose biometric information, and by combining part of the enrollment-purpose true feature point information, which is selected based on dummy data generated at random, and false feature point information generated based on the dummy data, and

executing authentication by extracting authentication-purpose feature point information from input authentication-purpose biometric information, generating authentication-purpose mixed feature point information that includes part of the authentication-purpose feature point information, which is selected based on the false feature point information, and the false feature point information, and by matching the authentication-purpose mixed feature point information with the enrollment-purpose mixed feature point information.

**11.** The biometric authentication method according to claim 10, further comprising:

generating, as the enrollment-purpose true feature point information, plural data of feature point information based on the enrollment-purpose biometric information obtained by an enrollment-purpose biometric information obtaining portion;

generating, as the dummy data, plural data of false feature point information at random;

setting range information with respect to the feature point information;

selecting, as false feature point group information, two or more among the plural data of false feature point information based on the range information set with respect to the enrollment-purpose true feature point information;

selecting two or more among the plural data of enrollment-purpose true feature point information based on the range information set with respect to the false feature point information selected in the enrollment-purpose first selection;

generating the enrollment-purpose mixed feature point information based on both the false feature point group information selected in the enrollment-purpose first selection and the two or more data of enrollment-purpose true feature point information selected in the enrollment-purpose second selection;

storing, in an enrollment-purpose mixed feature point information storage, the enrollment-purpose mixed feature point information generated in the enrollment-purpose mixed feature point information generating;

storing, in a false feature point group information storage, the false feature point group information selected in the enrollment-purpose first selection;

obtaining the authentication-purpose biometric information;

selecting, as plural data of authentication-purpose true feature point information, plural data of feature point information based on the authentication-purpose biometric information obtained in the authentication-purpose biometric information obtaining;

selecting two or more among the plural data of authentication-purpose true feature point information based on the range information set with respect to the two or more data of false feature point information stored in the false feature point group information storage;

generating the authentication-purpose mixed feature point information based on both the two or more data of authentication-purpose true feature point information selected in the authentication-purpose first selection and the two or more data of false feature point information stored in the false feature point group information storage; and

matching the authentication-purpose mixed feature point information generated in the authentication-purpose feature point information generating with the enrollment-purpose mixed feature point information stored in the enrollment-purpose mixed feature point information storage.

**12.** A biometric information processing apparatus, comprising:

an enrollment-purpose feature point information generating portion generating, as enrollment-purpose true feature point information, plural data of feature point information based on enrollment-purpose biometric information obtained by an enrollment-purpose biometric information obtaining portion;

a dummy data generating portion generating, as dummy data, plural data of false feature point information at random;

a range information setting portion setting range information with respect to the feature point information;

an enrollment-purpose first selection portion selecting, as false feature point group information, two or more among the plural data of false feature point information based on the range information set with respect to the enrollment-purpose true feature point information;

an enrollment-purpose second selection portion selecting two or more among the plural data of enrollment-purpose true feature point information based on the range information set with respect to the false feature point information selected by the enrollment-purpose first selection portion;

an enrollment-purpose mixed feature point information generating portion generating the enrollment-purpose mixed feature point information based on both the false feature point group information selected by the enrollment-purpose first selection portion and the two or more data of enrollment-purpose true feature point information selected by the enrollment-purpose second selection portion;

an enrollment-purpose mixed feature point information storing and control portion storing, in an enrollment-purpose mixed feature point information storage, the enrollment-purpose mixed feature point information generated by the enrollment-purpose mixed feature point information generating portion; and

a false feature point group information storing and control portion storing, in a false feature point group information storage, the false feature point group information selected by the enrollment-purpose first selection portion.

13. A biometric information processing apparatus, comprising:

an authentication-purpose feature point information generating portion generating plural data of authentication-purpose true feature point information based on authentication-purpose biometric information obtained by an authentication-purpose biometric information obtaining portion;

an authentication-purpose first selection portion selecting two or more among the plural data of authentication-purpose true feature point information based on false feature point information that is obtained from dummy data generated at random; and

an authentication-purpose mixed feature point information generating portion generating authentication-purpose mixed feature point information based on both the two or more data of authentication-purpose true feature point information selected by the authentication-purpose first selection portion and the false feature point information.

14. A non-transitory computer-readable storage medium including a program to cause a biometric information processing method to execute operations, the program comprising:

an enrollment-purpose feature point information generating procedure of generating, as enrollment-purpose true feature point information, plural data of feature point information based on enrollment-purpose biometric information obtained by an enrollment-purpose biometric information obtaining portion;

a dummy data generating procedure of generating, as dummy data, plural data of false feature point information at random;

a range information setting procedure of setting range information with respect to the feature point information;

an enrollment-purpose first selection procedure of selecting, as false feature point group information, two or more among the plural data of false feature point information based on the range information set with respect to the enrollment-purpose true feature point information;

an enrollment-purpose second selection procedure of selecting two or more among the plural data of enrollment-purpose true feature point information based on the range information set with respect to the false feature point information selected in the enrollment-purpose first selection procedure;

an enrollment-purpose mixed feature point information generating procedure of generating the enrollment-purpose mixed feature point information based on both the false feature point group information selected in the enrollment-purpose first selection procedure and the two or more data of enrollment-purpose true feature point information selected in the enrollment-purpose second selection procedure;

an enrollment-purpose mixed feature point information storing and control procedure of storing, in an enrollment-purpose mixed feature point information storage, the enrollment-purpose mixed feature point information generated in the enrollment-purpose mixed feature point information generating procedure; and

a false feature point group information storing and control procedure of storing, in a false feature point group information storage, the false feature point group information selected in the enrollment-purpose first selection procedure.

15. A non-transitory computer-readable storage medium including a program to cause a biometric information processing method to execute operations, the program comprising:

an authentication-purpose feature point information generating procedure of generating plural data of authentication-purpose true feature point information based on authentication-purpose biometric information obtained by an authentication-purpose biometric information obtaining portion;
an authentication-purpose first selection procedure of selecting two or more among the plural data of authentication-purpose true feature point information based on false feature point information that is obtained from dummy data generated at random; and
an authentication-purpose mixed feature point information generating procedure of generating authentication-purpose mixed feature point information based on both the two or more data of authentication-purpose true feature point information selected in the authentication-purpose first selection procedure and the false feature point information.

# FIG. 1

INPUTTING PROCESS  20

AUTHENTICATION PROCESS  10

BIOMETRIC INFORMATION INPUT PORTION  28

SENSOR CONTROL PORTION  21

DUMMY DATA SELECTING/SAVING PORTION  26

DUMMY DATA STORAGE  27

FEATURE POINT EXTRACTING PORTION  22

FEATURE POINT MIXING CONTROL PORTION  23

ALLOWABLE RANGE DETERMINING PORTION  231

FEATURE POINT MIXING PROCESS PORTION  232

COMMUNICATION CONTROL PORTION  25

AUTHENTICATION RESULT NOTIFYING PORTION  29

ENROLLMENT/MATCHING CONTROL PORTION  24

301

BIOMETRIC DATA STORAGE  16

BIOMETRIC DATA SAVING/MANAGING PORTION  11

BIOMETRIC DATA ENROLLMENT PROCESS PORTION  12

BIOMETRIC DATA MATCHING PROCESS PORTION  15

COMMUNICATION CONTROL PORTION  13

DUMMY DATA GENERATING PORTION  14

1a

EP 2 270 713 A2

# FIG. 2

EP 2 270 713 A2

## FIG. 3

TRUE FEATURE POINT

EP 2 270 713 A2

# FIG. 4

SECTOR-SHAPED ALLOWABLE RANGE

ALLOWABLE ANGLE

ALLOWABLE LENGTH

FEATURE POINT

EP 2 270 713 A2

FIG. 5

O : TRUE FEATURE POINT

# FIG. 6

| FEATURE POINT NUMBER | COORDINATES | DISTANCE TO NEAREST FEATURE POINT |
|---|---|---|
| 1 | (-175,400) | 241.6 |
| 2 | (-460,215) | 260.2 |
| 3 | (225,85) | 256.9 |
| | | |

EP 2 270 713 A2

# FIG. 7

APPEARANCE FREQUENCY

DISTANCE TO NEAREST FEATURE POINT

EP 2 270 713 A2

# FIG. 8

FALSE FEATURE POINT

TRUE FEATURE POINT

$\theta = 64°$

$r$

$2L$

$L$

$L$

EP 2 270 713 A2

FIG. 9

○ : TRUE FEATURE POINT
● : FALSE FEATURE POINT

# FIG. 10

FALSE FEATURE POINT

TRUE FEATURE POINT

SECTOR-SHAPED ALLOWABLE RANGE

EP 2 270 713 A2

# FIG. 11

FALSE FEATURE POINT SELECTED

TRUE FEATURE POINT

FALSE FEATURE POINT NOT SELECTED

SECTOR-SHAPED ALLOWABLE RANGE

O : TRUE FEATURE POINT

● : FALSE FEATURE POINT

EP 2 270 713 A2

# FIG. 12

EXTRA TRUE
FEATURE POINT

○ : TRUE FEATURE POINT
● : FALSE FEATURE POINT

EP 2 270 713 A2

FIG. 13

TRUE FEATURE POINT
DELETED

FALSE FEATURE POINT

TRUE FEATURE POINT

SECTOR-SHAPED
ALLOWABLE RANGE

EP 2 270 713 A2

# FIG. 14

FALSE FEATURE POINT

TRUE FEATURE POINT

SECTOR-SHAPED
ALLOWABLE RANGE

# FIG. 15

64.0°

230

FALSE FEATURE POINT

SECTOR-SHAPED
ALLOWABLE RANGE

EP 2 270 713 A2

## FIG. 16

| FEATURE POINT NUMBER | COORDINATES | DIRECTION | SET NUMBER OF FALSE FEATURE POINTS |
|---|---|---|---|
| 1 | (-345, 495) | 0.3 | 1 |
| 2 | (-500,130) | 89.5 | 1 |
| 3 | (-365,275) | 83.4 | 1 |

EP 2 270 713 A2

# FIG. 17

| SET NUMBER OF FALSE FEATURE POINTS | ALLOWABLE LENGTH | ALLOWABLE ANGLE |
|:---:|:---:|:---:|
| 1 | 217 | 64 |
| 2 | 198 | 64 |
| 3 | 250 | 64 |
| | | |

EP 2 270 713 A2

# FIG. 18

TRUE FEATURE POINT

| USER ID |
|---------|
| A0001 |

EP 2 270 713 A2

# FIG. 19

EP 2 270 713 A2

# FIG. 20

```
        ( START OF ENROLLMENT PROCESS )
                     │
                     ▼
        ┌────────────────────────────────┐
        │   INPUT BIOMETRIC INFORMATION   │ ～ A10
        └────────────────────────────────┘
                     │
                     ▼
    ┌──────────────────────────────────────────┐
    │ EXTRACT TRUE FEATURE POINT INFORMATION OF USER │ ～ A20
    └──────────────────────────────────────────┘
                     │
                     ▼
    ┌──────────────────────────────────────────┐
    │ DETERMINE SECTOR-SHAPED ALLOWABLE RANGE BASED ON FEATURE │ ～ A30
    │   POINT INFORMATION AND TRANSMIT IT TO    │
    │      "DUMMY DATA GENERATING PORTION"      │
    └──────────────────────────────────────────┘
                     │
                     ▼
    ┌──────────────────────────────────────────┐
    │  OBTAIN FALSE FEATURE POINT INFORMATION   │ ～ A40
    └──────────────────────────────────────────┘
                     │
                     ▼
    ┌──────────────────────────────────────────┐
    │  ADD FALSE FEATURE POINT INFORMATION TO TRUE │ ～ A50
    │          FEATURE POINT INFORMATION        │
    └──────────────────────────────────────────┘
                     │
                     ▼
    ┌──────────────────────────────────────────┐
    │ ASSIGN SECTOR-SHAPED ALLOWABLE RANGE TO TRUE FEATURE POINT │ ～ A60
    │ INFORMATION AND SELECT FALSE FEATURE POINT INCLUDED WITHIN │
    │               ASSIGNED RANGE              │
    └──────────────────────────────────────────┘
                     │
                     ▼
    ┌──────────────────────────────────────────┐
    │ ASSIGN SECTOR-SHAPED ALLOWABLE RANGE TO SELECTED FALSE │ ～ A70
    │   FEATURE POINT AND DELETE TRUE FEATURE   │
    │     POINT INCLUDED WITHIN ASSIGNED RANGE  │
    └──────────────────────────────────────────┘
                     │
                     ▼
    ┌──────────────────────────────────────────┐
    │ SELECT AND DELETE FALSE FEATURE POINT(S) AT RANDOM UNTIL │ ～ A80
    │       NUMBER OF FALSE FEATURE POINTS IS   │
    │    EQUAL TO NUMBER OF TRUE FEATURE POINTS  │
    └──────────────────────────────────────────┘
                     │
                     ▼
    ┌──────────────────────────────────────────┐
    │ SAVE INFORMATION REGARDING SELECTED FALSE FEATURE │ ～ A90
    │   POINTS AND SECTOR-SHAPED ALLOWABLE RANGE │
    └──────────────────────────────────────────┘
                     │
                     ▼
    ┌──────────────────────────────────────────┐
    │ SAVE, AS ENROLLED TEMPLATE, INFORMATION REGARDING SELECTED │ ～ A100
    │ TRUE FEATURE POINTS, INFORMATION REGARDING SELECTED FALSE │
    │         FEATURE POINTS, AND USER ID       │
    └──────────────────────────────────────────┘
                     │
                     ▼
        ( END OF ENROLLMENT PROCESS )
```

# FIG. 21

# FIG. 22

START OF MATCHING PROCESS

B10 — INPUT BIOMETRIC INFORMATION

B20 — EXTRACT TRUE FEATURE POINT INFORMATION OF USER

B30 — ROUGH ALIGNMENT

B40 — MATCH TRUE FEATURE POINT INFORMATION BY USING STORED FALSE FEATURE POINT INFORMATION AND STORED INFORMATION REGARDING SECTOR-SHAPED ALLOWABLE RANGE

B50 — IS THERE INFORMATION REGARDING TRUE FEATURE POINT INCLUDED WITHIN SECTOR-SHAPED ALLOWABLE RANGE ASSIGNED TO FALSE FEATURE POINT?

B60 — SELECT FALSE FEATURE POINT SET PROVIDING MAXIMUM NUMBER OF TRUE FEATURE POINTS INCLUDED WITHIN SECTOR-SHAPED ALLOWABLE RANGES

B70 — DELETE FALSE FEATURE POINTS NOT INCLUDED WITHIN SECTOR-SHAPED ALLOWABLE RANGES

B80 — ADD FALSE FEATURE POINT INFORMATION TO INFORMATION REGARDING ALL TRUE FEATURE POINTS

B90 — ASSIGN SECTOR-SHAPED ALLOWABLE RANGE TO FALSE FEATURE POINT INFORMATION AND DELETE TRUE FEATURE POINT INCLUDED WITHIN ASSIGNED RANGE

B100 — COMBINE FALSE TRUE FEATURE POINT INFORMATION WITH INFORMATION REGARDING NOT-DELETED TRUE FEATURE POINTS AND MATCH COMBINED INFORMATION

B110 — MATCH SUCCEEDED?

SUCCESS OF MATCH

FAILURE OF MATCH

# FIG. 23

# FIG. 24

EP 2 270 713 A2

# FIG. 25

SECTOR-SHAPED ALLOWABLE RANGE

FALSE FEATURE POINT

FALSE FEATURE POINT NOT SELECTED

b

a

EP 2 270 713 A2

# FIG. 26

FALSE FEATURE POINT
(AFTER CHANGE)

FALSE FEATURE POINT
(BEFORE CHANGE)

TRUE FEATURE POINT

B

TRUE FEATURE POINT TO
BE DELETED

A

EP 2 270 713 A2

# FIG. 27

| ALLOWABLE DISTANCE OF MOVEMENT | ALLOWABLE ANGLE OF MOVEMENT |
|:---:|:---:|
| 85 | 15 |

EP 2 270 713 A2

# FIG. 28

EP 2 270 713 A2

| BEFORE CHANGE | | AFTER CHANGE | | DISTANCE OF MOVEMENT |
|---|---|---|---|---|
| COORDINATES OF FEATURE POINT | ANGLE OF FEATURE POINT | COORDINATES OF FEATURE POINT | ANGLE OF FEATURE POINT | |
| (-420,-200) | 333.4 | (-475,-167) | 347.9 | 64 |
| | | | | |

# FIG. 29

FIG. 30

FALSE FEATURE POINT SELECTED BASED ON TRUE FEATURE POINT. THIS FALSE FEATURE POINT IS DELETED AS USELESS ONE BECAUSE IT DOES NOT TAKE PART IN DELETING TRUE FEATURE POINT [PROCESS (3)]

FALSE FEATURE POINT WHICH IS SELECTED BASED ON TRUE FEATURE POINT AND WHICH IS USED IN DELETING TRUE FEATURE POINT OTHER THAN THOSE IN PREVIOUS ENROLLMENT PROCESS [PROCESS (4)]

TRUE FEATURE POINT OTHER THAN THOSE IN PREVIOUS ENROLLMENT PROCESS (TRUE FEATURE POINT TO BE DELETED)

AREA TAKING PART IN DELETING TRUE FEATURE POINT

# FIG. 31

EP 2 270 713 A2

# FIG. 32

EP 2 270 713 A2

# FIG. 33

INPUTTING PROCESS

DUMMY DATA SELECTING/SAVING PORTION — 252

ENCRYPTION/DECRYPTION PROCESS PORTION

BIOMETRIC INFORMATION INPUT PORTION — 28

SENSOR CONTROL PORTION — 21

26

DUMMY DATA STORAGE — 27

FEATURE POINT EXTRACTING PORTION — 22

FEATURE POINT MIXING CONTROL PORTION — 23

AUTHENTICATION RESULT NOTIFYING PORTION — 29

ENROLLMENT/MATCHING CONTROL PORTION — 24

COMMUNICATION CONTROL PORTION — 25

20

AUTHENTICATION PROCESS

ENCRYPTION/DECRYPTION PROCESS PORTION — 171

BIOMETRIC DATA STORAGE — 16

BIOMETRIC DATA SAVING/MANAGING PORTION — 11

BIOMETRIC DATA ENROLLMENT PROCESS PORTION — 12

BIOMETRIC DATA MATCHING PROCESS PORTION — 15

COMMUNICATION CONTROL PORTION — 13

DUMMY DATA GENERATING PORTION — 14

301

1e

10

EP 2 270 713 A2

# FIG. 34

INPUTTING PROCESS

AUTHENTICATION PROCESS

DUMMY DATA SELECTING/SAVING PORTION

BIOMETRIC DATA STORAGE — 16

28

BIOMETRIC INFORMATION INPUT PORTION

SENSOR CONTROL PORTION — 21

26

DUMMY DATA STORAGE

27

BIOMETRIC DATA SAVING/MANAGING PORTION — 11

FEATURE POINT EXTRACTING PORTION — 22

12

15

FEATURE POINT MIXING CONTROL PORTION — 23

253

172

BIOMETRIC DATA ENROLLMENT PROCESS PORTION

BIOMETRIC DATA MATCHING PROCESS PORTION

29

25

ENCRYPTION/ DECRYPTION PROCESS PORTION

ENCRYPTION/ DECRYPTION PROCESS PORTION

13

14

AUTHENTICATION RESULT NOTIFYING PORTION

ENROLLMENT/MATCHING CONTROL PORTION — 24

COMMUNICATION CONTROL PORTION

COMMUNICATION CONTROL PORTION

DUMMY DATA GENERATING PORTION

20

301

10

1f

EP 2 270 713 A2

63

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009157193 A
- JP 2006158851 A
- JP 2007328502 A

### Non-patent literature cited in the description

- **N. K. Ratha et al.** Enhancing security and privacy in biometrics-based authentication systems. *IBM SYSTEMS JOURNAL,* 2001, vol. 40 (3